# EUROPEAN PATENT SPECIFICATION

(11) **EP 1 138 732 B1**
(45) Date of publication and mention of the grant of the patent: **31.08.2005**
(21) Application number: 01108142.9
(22) Date of filing: 30.03.2001
(51) Int. Cl.: C09D 201/10, C09D 201/00, C09D 183/04, C08J 7/04, C08F 230/08, C09D 183/14

(54) **Coating composition and cured product**
Überzugsmittel und gehärtetes Produkt
Composition de revêtement et produit durci

(30) Priority: 31.03.2000 JP 2000097556
(43) Date of publication of application: 04.10.2001
(73) Proprietor: JSR Corporation, Tokyo 104-0045 (JP)
(72) Inventor: Kanamori, Tarou, Tokyo 104-8410 (JP); Kawahara, Kouji, Tokyo 104-8410 (JP); Hashiguchi, Yuichi, Tokyo 104-8410 (JP)
(74) Representative: TBK-Patent

(56) References cited:
- EP-A- 0 824 127
- EP-A- 0 934 984
- EP-A- 1 022 318

## Description

### FIELD OF THE INVENTION

The present invention relates to a coating composition and a cured product, and more particularly to an organosilane coating composition comprising a polymer containing in its molecular chain a specific silyl group, a group having ultraviolet absorbing ability and a group having ultraviolet stability, the composition showing no bleedout and no deterioration of an ultraviolet absorber, being excellent in ultraviolet screening properties, and further being excellent in weather resistance, adhesion, luster, hardness, chemical resistance, water resistance and stain resistance.

### BACKGROUND OF THE INVENTION

Organosilane coating materials are coating materials excellent in weather (light) resistance, stain resistance and so on, and further excellent in heat resistance, alkali resistance, organic chemical resistance, moisture resistance, water resistance, insulation resistance, wear resistance and scratch resistance. In recent years, the demand for coating materials having long-term durability has increased, and particularly, the demand for coating materials for protecting grounds and substrates has increased. Also in the field of electronics, the conversion of base materials from glass to plastics has been examined, and it has become necessary therein to protect the base materials from ultraviolet rays. On the other hand, the organosilane coating materials are excellent in weather resistance (ultraviolet deterioration resistance) as described above. In other wards, the organosilane coating materials have no absorption of ultraviolet rays, so that they are stable. On the other hand, however, grounds and substrates are deteriorated by transmission of ultraviolet rays to possibly develop separation or cracks.

For solving this problem, a composition has also been proposed in which an organosilane coating material and an ultraviolet absorber are compounded. However, mere blending of the ultraviolet absorber with the organosilane coating material results in sedimentation or separation during storage, or bleedout of the ultraviolet absorber, which sometimes causes deterioration of ultraviolet screening properties as the coating material.

EP-A-0 934 984 relates to a curable composition comprising (A) a saturated hydrocarbon polymer having at least one crosslinking silyl group, (B) a nickel atom-containing light stabilizer and (C) a silane coupling agent.

EP-A-1 022 318, a document according to Article 54(3)/(4) EPC, discloses a film provided by a method comprising the steps of forming on the surface of an organic film an (under)coating of a coating composition composed mainly of at least one component (a) selected from organosilanes, hydrolyzates of the organosilanes, and condensates of the organosilanes and, when desired, a polymer component (b) having a silyl group containing silicon atoms bonded with a hydrolytic group and/or a hydroxy group, and forming on the (under)coating an (over)coating of a coating composition composed mainly of the component (a), a photocatalyst and, if desired, the component (b).

EP-A-0 824 127 is directed to a water-type dispersion composition comprising a polymer dispersed in an aqueous medium, the polymer being produced from a polyorganosiloxane and a vinyl polymer.

### SUMMARY OF THE INVENTION

An object of the present invention is to provide a coating composition excellent in storage stability, excellent in coating appearance, adhesion and weather resistance, high in hardness, having ultraviolet absorbing ability, showing no bleedout of an ultraviolet absorber, decreased in deterioration of ultraviolet absorbing ability, and capable of preventing deterioration of a ground or a substrate, by containing a polymer having a specific silyl group, an ultraviolet absorptive group and an ultraviolet stable group in the same polymer chain.

The present invention provides a coating composition as defined in claim 1 (hereinafter also referred to as "composition (1)"), wherein component (a1) thereof is hereinafter also referred to as "specific silyl group (a1), compement (a2) thereof is hereinafter also referred to as "ultraviolet absorptive group (a2) and component (a3) thereof is hereinafter also referred to as "ultraviolet stable group (a3)

The present invention further provides a coating composition (hereinafter also referred to as "composition (2)", and generically named merely "the composition of the present invention" together with composition (1)) comprising the above-mentioned component (A), and
(B) at least one component (hereinafter also referred to as "component (B)") selected from the group consisting of an organosilane represented by the following general formula (1) (hereinafter also referred to as organosilane (1)), a hydrolyzate of the organosilane and a condensate of the organosilane:

(R¹)ₙSi(OR²)₄₋ₙ (1)

wherein, R1, which may be the same or different when two or more R1 groups are present, represents a hydrogen atom or a monovalent organic group having 1 to 8 carbon atoms; R², which may be the same or different when two or more R² groups are present, represents an alkyl group having 1 to 5 carbon atoms, an acyl group having 1 to 6 carbon atoms or a phenyl group; and n is an integer ranging from 0 to 3.

The above-mentioned ultraviolet absorptive group (a2) is preferably an organic group having a benzotriazole structure.

The above-mentioned ultraviolet stable group (a3) is preferably an organic group having a benzophenone structure.

Further, the present invention relates to a cured product obtained by coating a substrate with the above-mentioned coating composition and curing the coating composition.

Still further, the present invention relates to a cured product obtained by forming on a substrate an undercoat layer comprising the above-mentioned coating composition and curing the undercoat layer, and then, forming thereon an overcoat layer comprising a coating composition for overcoating of (1) or (2) described below and curing the overcoat layer:
(1) A coating composition for overcoating comprising the above-mentioned composition (B); and
(2) A coating composition for overcoating comprising the above-mentioned composition (B) and a polymer containing silyl group (a1) having a silicon atom bound to a hydrolytic group and/or a hydroxyl group.

The above-mentioned substrate may be made of a plastic resin.

### DETAILED DESCRIPTION OF THE INVENTION

### Composition (1)

Composition (1) of the present invention is a coating composition comprising polymer (A) having specific silyl group (a1), ultraviolet absorptive group (a2) and ultraviolet stable group (a3) in the same polymer chain.

Such polymer (A) acts so as to condense hydrolytic groups and/or hydroxyl groups in specific silyl group (a1), when a coating film obtained from composition (1) is cured, thereby providing excellent coating film properties, and so as to allow ultraviolet absorptive group (a2) to absorb ultraviolet rays and ultraviolet stable group (a3) to capture radicals generated by ultraviolet rays, thereby stabilizing them. Groups (a1) to (a3) are preferably exist in the same polymer chain.

The content of specific silyl group (a1) in polymer (A) is generally from 0.001 to 20% by weight, and preferably from 0.01 to 15% by weight, in terms of the amount of silicon atoms, based on the polymer prior to introduction of specific silyl group (a1).

The above-mentioned specific silyl group (a1) is preferably represented by the following general formula (2): 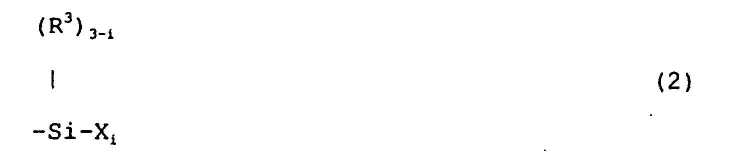 wherein, X represents a hydrolytic group such as a halogen atom, an alkoxyl group, an acyloxy group, an aminoxy group, a phenoxy group, a thioalkoxyl group or an amino group, or a hydroxyl group, R³ represents a hydrogen atom, an alkyl group having 1 to 10 carbon atoms or an aralkyl group having 1 to 10 carbon atoms, and i is an integer ranging from 1 to 3.

Polymer (A) having groups (a1) to (a3) in the same polymer chain includes, for example,
a polymer produced by (a) a method of adding a hydrosilane compound corresponding to the above-mentioned general formula (2) (hereinafter also referred to as "hydrosilane compound (a)") to a carbon-carbon double bond of a carbon-carbon double bond-containing vinyl polymer having ultraviolet absorptive group (a2) and ultraviolet stable group (a3) (hereinafter also referred to as an "unsaturated bond-containing vinyl polymer") by addition reaction, and
a polymer produced by (b) a method of copolymerizing a silane compound represented by the following general formula (2') (hereinafter also referred to as "unsaturated silane compound (b)" with a monomer having ultraviolet absorptive group (a2) and a polymerizable unsaturated group (hereinafter also referred to as "monomer (a2)"), a monomer having ultraviolet stable group (a3) and a polymerizable unsaturated group (hereinafter also referred to as "monomer (a3)"), and optionally an additional vinyl monomer (a4): 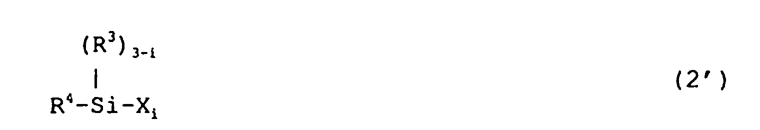
wherein, X, R³ and i have the same meanings as given in general formula (2), and R4 represents an organic group having a polymerizable unsaturated group.

Hydrosilane compounds (a) used in the method of (a) described above include, for example, halogenated silanes such as methyldichlorosilane, trichlorosilane and phenyldichlorosilane; alkoxysilanes such as methyldiethoxysilane, methyldimethoxysilane, phenyldimethoxysilane, trimethoxysilane and triethoxysilane; acyloxysilanes such as methyldiacetoxysilane, phenyldiacetoxysilane and triacetoxysilane; and aminoxysilanes such as methyldiaminoxysilane, triaminoxysilane and dimethylaminoxysilane.

These hydrosilane compounds (a) can be used either alone or as a mixture of two or more of them.

There is no particular limitation on the unsaturated bond-containing vinyl polymers used in the method of (a) described above, as long as they are polymers each having ultraviolet absorptive group (a2) and ultraviolet stable group (a3), other than hydroxyl group-containing polymers. For example, such vinyl polymers can be produced by a method of (a-1) or (a-2) described below or a combination thereof.
(a-1) A vinyl monomer having a functional group (hereinafter also referred to as "functional group (α)") is (co)polymerized, and then, an unsaturated compound having a carbon-carbon double bond and a functional group (hereinafter referred to as "functional group (β)") which can react with functional group (α) is reacted with functional group (α) in the co(polymer), thereby producing an unsaturated bond-containing vinyl polymer containing ultraviolet absorptive group (a2) and ultraviolet stable group (a3) and having carbon-carbon double bonds at side chains.
(a-2) Using a radical polymerization initiator having functional group (α) (for example, 4,4-azobis-4-cyanovaleric acid) or a radical polymerization initiator and a chain transfer agent both having functional group (α) (for example, 4,4-azobis-4-cyanovaleric acid and dithioglycolic acid), monomer (a2), monomer (a3) and optionally another vinyl monomer (a4) are (co)polymerized to synthesize a (co)polymer having functional group (α) derived from the radical polymerization initiator or the chain transfer agent at one end or both ends of the polymer chain, and then, reacting an unsaturated compound having functional group (β) and a carbon-carbon double bond with functional group (α) in the (co)polymer, thereby producing an unsaturated bond-containing vinyl polymer containing ultraviolet absorptive group (a2) and ultraviolet stable group (a3) in the same polymer chain and having the carbon-carbon double bond(s) at one end or both ends of the polymer chain.

Examples of the reactions of functional group (α) with functional group (β) in the methods of (a-1) and (a-2) include the esterification reaction of a carboxyl group with a hydroxyl group, the ring-opening esterification reaction of a carboxylic anhydride group with a hydroxyl group, the esterification reaction of a carboxyl group with an epoxy group, the amidation reaction of a carboxyl group with an amino group, the ring-opening amidation reaction of a carboxylic anhydride group with an amino group, the ring-opening addition reaction of an epoxy group with an amino group, the urethanation reaction of a hydroxyl group with an isocyanate group, and a combination of these reactions.

The vinyl monomers having functional group (α) include, for example, unsaturated carboxylic acids such as (meth) acrylic acid, crotonic acid, maleic acid, fumaric acid and itaconic acid; unsaturated carboxylic anhydrides such as maleic anhydride and itaconic anhydride; hydroxyl group-containing vinyl monomers such as 2-hydroxyethyl (meth)acrylate, 2-hydroxypropyl (meth)acrylate, 3-hydroxypropyl (meth)acrylate, N-methylol (meth)acrylate and 2-hydroxyethyl vinyl ether; amino group-containing vinyl monomers such as 2-aminoethyl (meth)acrylate, 2-aminopropyl (meth)acrylate 3-aminopropyl (meth)acrylate, 2-dimethylaminoethyl (meth) acrylate, 2-diethylaminoethyl (meth)acrylate, 2-dimethylaminopropyl (meth)acrylate, 3-dimethylaminopropyl (meth)acrylate, 2-aminoethyl vinyl ether, N,N-dimethylamino(meth)acrylamide and N,N-diethylamino(meth) acrylamide; amineimido group-containing vinyl monomers such as 1,1,1-trimethylamine(meth)acrylimide, 1-methyl-1-ethylamine-(meth)acrylimide, 1,1-dimethyl-1-(2-hydroxypropyl)amine-(meth)acrylimide, 1,1-dimethyl-1-(2'-phenyl-2'-hydroxyethyl) amine (meth)acrylimide and 1,1-dimethyl-1-(2'-hydroxy-2'-phenoxypropyl)amine(meth)acrylimide; and epoxy group-containing vinyl monomers such as glycidyl (meth)acrylate and allyl glycidyl ether.

These vinyl monomers having functional group (α) can be used either alone or as a mixture of two or more of them.

The above-mentioned monomer having ultraviolet absorptive group (a2) and a polymerizable unsaturated group is able to impart a function of absorbing ultraviolet rays to the (co) polymer by means of (co) polymerization.

The ultraviolet absorptive group (a2) is selected from groups having benzotriazole, benzophenone, triazine, oxalic anilide and malonate structures. In particular, an organic group having a benzotriazole structure and an organic group having a benzophenone structure are preferred.

There is no particular limitation on the above-mentioned monomer (a2), and specific examples thereof include benzotriazole compounds such as 2-(2'-hydroxy-5'-methacryloxyethylphenyl)-2H-benzotriazole, 2-(2'-hydroxy-3'-t-butyl-5'-methacryloxyethylphenyl)-2H-benzotriazole, 2-[2'-(meth)-acryloyloxy-5'-methylphenyl]benzotriazole, 2-[2'-(meth)-acryloyloxy-5'-t-octylphenyl]benzotriazole and 2-[2'-(meth)-acryloyloxy-3',5'-di-t-butylphenyl]benzotriazole; benzophenone compounds such as 2-hydroxy-4-(methacyloyloxyethoxy)benzophenone, 2-hydroxy-4-(acryloyloxyethoxy)benzophenone, 2-hydroxy-4-methacryloyloxymethylaminobenzophenone, 2-hydroxy-4-methacryloyloxymethoxybenzophenone, 2-hydroxy-4-methacryloyloxymethylthiobenzophenone, 2-(meth)acryloyloxy-4-methoxybenzophenone, 2-(meth)acryloyloxy-2'-hydroxy-4-methoxybenzophenone, 2,2'-di(meth)acryloyloxy-4-methoxybenzophenone, 2,2'-di(meth)acryloyloxy-4,4'-di-methoxybenzophenone, 2-(meth)acryloyloxy-4-methoxy-2'-carboxybenzophenone, 2-hydroxy-4-[3-(meth)acryloyloxy-2hydroxypropoxy]-benzophenone and 2,2'-dihydroxy-4-[3-(meth) acryloyloxy-2-hydroxypropoxy]benzophenone; triazine compounds such as 2-(4,6-diphenyl-1,2,5-triazine-2-yl)-5(methacryloyloxyethoxy)-phenol; and cyanoacrylate compounds such as 2-ethylhexyl-2-cyano-3,3-diphenyl (meth)acrylate. Preferred are 2-(2'-hydroxy-5'-methacryloxyethylphenyl)-2H-benzotriazole, 2-(2'-hydroxy-3'-t-butyl-5'-methacryl-oxyethylphenyl)-2H-benzotriazole, 2-hydroxy-4-(methacyloyloxyethoxy)benzophenone and 2-hydroxy-4-(acryloyloxyethoxy)benzophenone.

The above-mentioned monomers (a2) can be used either alone or as a combination of two or more of them.

The rate of monomer (a2) used is usually from 1 to 60% by weight, and preferably from 5 to 50% by weight, based on the total monomer in component (A). When the rate of monomer (a2) used is less than 1% by weight, sufficient ultraviolet absorbing ability is not exhibited in some cases. On the other hand, exceeding 60% by weight sometimes results in the development of a problem with regard to flexibility, adhesion and so on.

The above-mentioned monomer having ultraviolet stable group (a3) and a polymerizable unsaturated group acts so as to capture radicals produced by bond dissociation due to ultraviolet rays to stabilize them, thereby improving weather resistance.

As monomer (a3), a polymerizable unsaturated group-containing amine compound having steric hindrance is preferred, and a polymerizable unsaturated group-containing piperidine compound having steric hindrance (hereinafter also referred to as a "piperidine monomer") is particularly preferred among others.

There is no particular limitation on the above-mentioned piperidine monomer, and preferred examples thereof include 4-(meth)acryloyloxy-2,2,6,6-tetramethylpiperidine, 4-(meth)-acryloylamino-2,2,6,6-tetramethylpiperidine, 4-(meth)-acryloyloxy-1,2,2,6,6-pentamethylpiperidine, 4-(meth)-acryloylamino-1,2,2,6,6-pentamethylpiperidine, 4-cyano-4-(meth)acryloyloxy-2,2,6,6-tetramethylpiperidine, 4-cyano-4-(meth)acryloylamino-2,2,6,6-tetramethylpiperidine, 4-cyano-4-(meth)acryloyloxy-1,2,2,6,6-pentamethylpiperidine, 4-cyano-4-(meth)acryloylamino-1,2,2,6,6-pentamethylpiperi-dine, 1-(meth)acryloyl-4-(meth)acryloyloxy-2,2,6,6-tetramethylpiperidine, 1-(meth)acryloyl-4-(meth)acryloylamino2,2,6,6-tetramethylpiperidine, 1-(meth)acryloyl-4-cyano-4-(meth)-acryloyloxy-2,2,6,6-tetramethylpiperidine, 1-(meth) acryloyl-4-cyano-4-(meth)acryloylamino-2,2,6,6-tetra-methylpiperidine, 4-crotonoyloxy-2,2,6,6-tetramethylpiperidine, 4-crotonoylamino-2,2,6,6-tetramethylpiperidine, 4-crotonoyloxy-1,2,2,6,6-pentamethylpiperidine, 4-crotonoylamino-1,2,2, 6,6-pentamethylpiperidine, 4-cyano-4-crotonoyloxy-2,2,6,6-tetramethylpiperidine, 4-cyano-4-crotonoylamino-2,2,6,6-tetramethylpiperidine, 1-crotonoyl-4-crotonoyloxy-2,2,6,6-tetramethylpiperidine, 1-crotonoyl-4-crotonoylamino-2,2,6,6-tetramethylpiperidine, lcrotonoyl-4-cyano-4-crotonoyloxy-2,2, 6,6-tetramethylpiperidine and 1-crotonoyl-4-cyano-4-crotonoylamino2,2,6,6-tetramethylpiperidine.

Particularly preferred are 4-(meth)acryloyloxy2,2,6,6-tetramethylpiperidine and 4-(meth)acryloyloxyl,2,2,6,6-pentamethylpiperidine.

Monomers (a3) other than the above-mentioned piperidine monomers are exclusively 1,3-bis(4-benzoyl-3-hydroxyphenyl)-2-propyl (meth)acrylate and ethyl-2-cyano-3,3-diphenyl (meth)acrylate, as well as salicylic acid compounds such as phenylsalicylic acid (meth)acrylate and t-butylphenylsalicylic acid (meth)acrylate.

In the present invention, these monomers (a3) can be used either alone or as a combination of two or more of them.

In the present invention, the amount of the above-mentioned monomer (a3) used is usually from 1 to 30% by weight, and preferably from 1 to 25% by weight, based on the total monomer in component (A) . Less than 1% by weight results in the tendency of long-term weather resistance of a coating film to deteriorate, which is targeted in the present invention, whereas exceeding 30% by weight sometimes causes a reduction in water resistance of the coating layer or adhesion to a substrate.

Further, other vinyl monomers (a4) for copolymerizing with the vinyl monomers having functional group (α) include, for example, methyl (meth)acrylate, ethyl (meth) acrylate, n-propyl (meth)acrylate, i-propyl (meth)acrylate, n-butyl (meth)-acrylate, t-butyl (meth)acrylate, 2-ethylhexyl (meth)acrylate, cyclohexyl (meth)acrylate, (meth)acrylamide, crotonamide, maleic acid diamide, fumaric acid diamide, itaconic acid diamide, α-ethylacrylamide, N-butoxmethyl(meth)acrylamide, (meth)-acrylonitrile, styrene, α-methylstyrene, vinyl chloride, vinyl acetate and vinyl propionate.

These other vinyl monomers (a4) can be used either alone or as a mixture of two or more of them.

The unsaturated compounds having functional group (β) and carbon-carbon double bonds include, for example, vinyl monomers similar to the vinyl monomers having functional group (α), isocyanate group-containing unsaturated compounds obtained by the equimolar reaction of the above-mentioned hydroxyl group-containing vinyl monomers with diisocyanate compounds.

Specific examples of unsaturated silane compound (b) used in the method of (b) described above include
CH₂=CHSi(CH₃)(OCH₃)₂, CH₂=CHSi(OCH₃)₃, CH₂=CHSi(CH₃)Cl₂,
CH₂=CHSiCl₃, CH₂=CHCOO(CH₂)₂Si(CH₃)(OCH₃)₂,
CH₂=CHCOO(CH₂)₂Si(OCH₃)₃, CH₂=CHCOO(CH₂)₃Si(CH₃)(OCH₃)₂,
CH₂=CHCOO(CH₂)₃Si(OCH₃)₃, CH₂=CHCOO(CH₂)₂Si(CH₃)Cl₂,
CH₂=CHCOO(CH₂)₂SiCl₃, CH₂=CHCOO(CH₂)₃Si(CH₃)Cl₂,
CH₂=CHCOO(CH₂)₃SiCl₃, CH₂=C(CH₃)COO(CH₂)₂Si(CH₃)(OCH₃)₂,
CH₂=C(CH₃)COO(CH₂)₂Si(OCH₃)₃, CH₂=C(CH₃)COO(CH₂)₃Si(CH₃)(OCH₃)₂,
CH₂=C(CH₃)COO (CH₂)₃Si(OCH₃)₃, CH₂=C(CH₃)COO (CH₂)₂Si(CH₃)Cl₂,
CH₂=C(CH₃)COO (CH₂)₂SiCl₃, CH₂=C(CH₃)COO (CH₂)₃Si(CH₃)Cl₂,
CH₂=C(CH₃)COO (CH₂)₃SiCl₃, 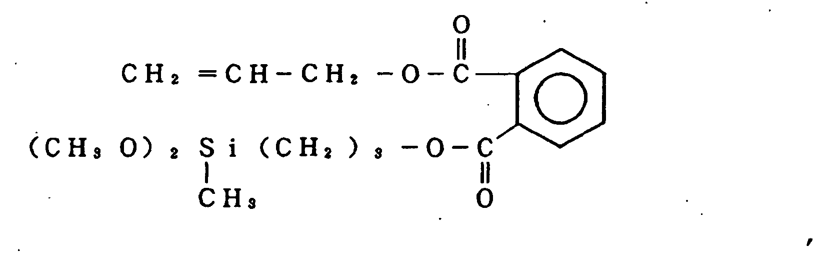 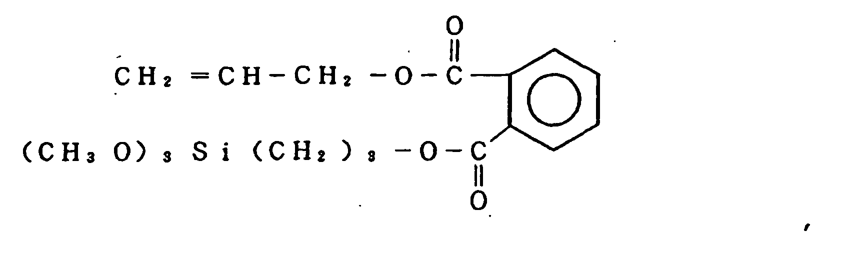 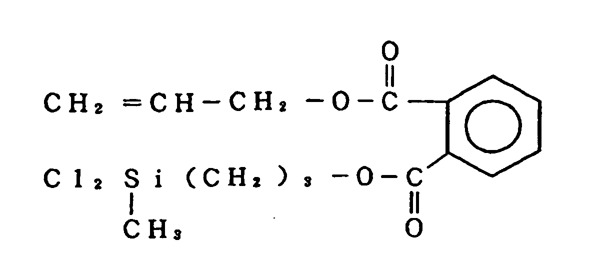 and

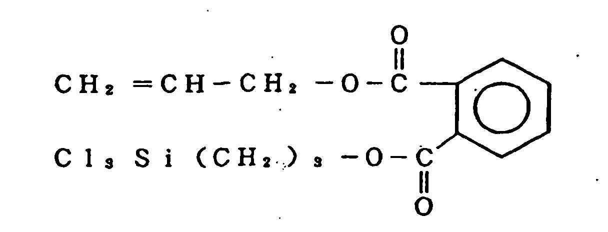

These unsaturated silane compounds (b) can be used either alone or as a mixture of two or more of them.

Further, monomer (a2) and monomer (a3) copolymerized with unsaturated silane compound (b), and other vinyl monomers (a4) optionally used include, for example, one or more of other vinyl monomers and the vinyl monomers having functional group (α), as well as monomer (a2) and monomer (a3) exemplified in the method of (a-1) described above.

Although component (A) can be produced, for example, by bulk polymerization or radical polymerization in a water medium or an organic medium, for example, according to the above-mentioned production methods (a) and (b), polymerization in an organic solvent is preferred.

As the above-mentioned organic solvents, there can be used, for example, one or more of an aromatic hydrocarbon, an ether, an ester, an alcohol, a ketone and an amide. Further, specific examples of polymerization initiators used for the radical polymerization described above include peroxides such as cumene hydroperoxide, isopropylbenzene hydroperoxide, paramenthane hydroperoxide, benzoyl peroxide, dilauroyl peroxide, diisopropyl peroxide, di-t-butyl peroxide and dicumyl peroxide, azo compounds such as azobisisobutyronitrile, azobis-valeronitrile, azobisisocapronitrile and azobis(phenylisobutyronitrile), and redox catalysts comprising the above-mentioned peroxides and reducing agents.

These radical polymerization initiators can be used either alone or as a mixture of two or more of them.

The amount of the radical polymerization initiator used is preferably from 0.03 to 10% by weight, and particularly preferably from 0.05 to 5% by weight, based on the total monomer.

In the above-mentioned radical polymerization, there can be used chain transfer agents such as an α-methylstyrene dimmer containing 60% by weight or more of a 2,4-diphenyl-4-methyl-1-pentene component, terpinolene, α-terpinene, γ-terpinene, dipentene, octyl mercaptan, n-dodecyl mercaptan, n-hexadecyl mercaptan, dimethylxanthogene disulfide, diethylxanthogene disulfide, diisopropylxanthogene disulfide, tetramethylthiuram monosulfide, tetraethylthiuram disulfide, tetrabutylthiuram disulfide, dipentanemethylthiuram disulfide, trichloromethane, carbon tetrachloride and trichloroethane.

These chain transfer agents may be used either alone or as a mixture of two or more of them.

In the above-mentioned radical polymerization, reaction components such as the monomer and the radical polymerization initiator may be added entirely before the initiation of reaction, or a part or all of them may be added in parts or continuously after the initiation of reaction. The polymerization temperature is usually from 0°C to 200°C, and preferably from 0°C to 100°C, although it is suitably selected depending on the kind of polymerization medium and radical polymerization initiator. The reaction conditions such as the temperature and the stirring rate can also be appropriately changed, and the polymerization reaction can be conducted by any of continuous, semi-continuous and batch-wise operations.

The weight average molecular weight (hereinafter also referred to "Mw") of component (A), which is determined by gel permeation chromatography (hereinafter also referred to as "GPC") and converted to that of polystyrene, is preferably from 1,000 to 100,000, and more preferably from 2,000 to 50,000.

The total solid concentration of composition (1) is preferably 50% by weight or less, and properly adjusted depending on the purpose of application. For example, for impregnation to a substrate for thin film formation, it is usually from 5 to 30% by weight. For thick film formation, it is usually from 20 to 50% by weight, and preferably from 30 to 45% by weight.

### Composition (2)

Composition (2) is a coating composition comprising the above-mentioned component (A), and (B) at least one component selected from the group consisting of the above-mentioned organosilane (1), a hydrolyzate of the organosilane and a condensate of the organosilane.

Polymer (A) constituting composition (2) is the same as with composition (1), so that the description thereof is omitted.

Component (B) in composition (2) is at least one component selected from the group consisting of an organosilane represented by the above-mentioned general formula (1), a hydrolyzate of the organosilane and a condensate of the organosilane, and acts as a main binder in the composition of the present invention.

In general formula (1), the monovalent organic group of 1 to 8 carbon atoms represented by R¹ includes, for example, an alkyl group such as methyl, ethyl, n-propyl, i-propyl, n-butyl, sec-butyl, t-butyl, n-hexyl, n-heptyl, n-octyl or 2-ethylhexyl; a vinyl group; an allyl group; a cyclohexyl group; a phenyl group; an acyl group; a glycidyl group; a (meth)acryloxy group; an ureido group; an amido group; a fluoroacetoamido group; an isocyanate group; or a substituent derivative thereof.

The substituent groups in the substituent derivatives represented by R¹ include, for example, a halogen atom, a substituted or unsubstituted amino group, a hydroxyl group, a mercapto group, an isocyanate group, a glycidoxy group, a 3,4-epoxycyclohexyl group, a (meth)acryloxy group, an ureido group and an ammonium base. The number of carbon atoms of R¹ constituting the substituent derivative is 8 or less, including the carbon atoms in the substituent group.

When a plurality of R¹ groups are present in general formula (1), they may be identical to or different from each other.

In general formula (1), the alkyl groups of R² each having 1 to 5 carbon atoms include, for example, methyl, ethyl, n-propyl, i-propyl, n-butyl, sec-butyl, t-butyl and n-pentyl, and the acyl groups each having 1 to 6 carbon atoms include, for example, acetyl, propionyl, butyryl, valeryl and caproyl.

When a plurality of R¹ groups are present in general formula (1), they may be identical to or different from each other.

In general formula (1), n is an integer of 0 to 3, and preferably an integer of 0 to 2.

In component (A), specific examples of the organosilanes in which n is 0 include tetramethoxysilane, tetraethoxysilane, tetra-n-propoxysilane, tetra-i-propoxysilane, tetra-n-butoxysilane, tetraacetyloxysilane and tetraphenoxysilane.

Specific examples of the organosilanes in which n is 1 in general formula (1) include methyltriacetyloxysilane and methyltriphenoxysilane, as well as trialkoxysilanes such as methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-pentyltriethoxysilane, cyclohexyltrimethoxysilane, cyclohexyltriethoxysilane, phenyltrimethoxysilane, phenyltriethoxysilane, N-(2-aminoethyl)-3-aminopropyltrimethoxysilane, N-(2-aminoethyl)-3-aminopropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltri-ethoxysilane, 3-(meth)acryloxypropyltrimethoxysilane, 3-(meth)acryloxypropyltriethoxysilane, vinyltrimethoxysilane, vinyltriethoxysilane, allyltrimethoxysilane, vinyltri-acetoxysilane, 3-chloropropyltrimethoxysilane, 3-chloro-propyltriethoxysilane, 3,3,3-trifluoropropyltrimethoxy-silane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxy-silane, 3-hydroxypropyltrimethoxysilane, 3-hydroxypropyl-triethoxysilane, 3-mercaptopropyltrimethoxysilane, 3-mercaptopropyltriethoxysilane, 3-isocyanatopropyltri-methoxysilane, 3-isocyanatopropyltriethoxysilane, 3-ureidopropyltrimethoxysilane and 3-ureidopropyltriethoxysilane. Of these organosilanes, preferred are trialkoxysilanes, and more preferred are methyltrimethoxysilane, methyltriethoxysilane, ethyltrimethoxysilane and ethyltriethoxysilane.

Further, specific examples of the organosilanes in which n is 2 in general formula (1) include dimethyldiacetyloxysilane and dimethyldiphenoxysilane, as well as dialkoxysilanes such as dimethyldimethoxysilane, dimethyldiethoxysilane, diethyldimethoxysilane, diethyldiethoxysilane, di-n-propyldimethoxysilane, di-n-propyldiethoxysilane, di-i-propyldimethoxysilane, di-i-propyldiethoxysilane, di-n-butyldimethoxysilane, di-n-butyldiethoxysilane, n-pentyl-methyldimethoxysilane, n-pentyl·methyldiethoxysilane, cyclohexyl· methyldimethoxysilane, cyclohexyl·methyldiethoxysilane, phenyl·methyldimethoxysilane, phenyl·methyldiethoxysilane, di-n-pentyldimethoxysilane, di-n-pentyldiethoxysilane, di-n-hexyldimethoxysilane, di-n-hexyldiethoxysilane, di-n-heptyldimethoxysilane, di-n-heptyldiethoxysilane, di-n-octyldimethoxysilane, di-n-octyldiethoxysilane, dicyclohexyldimethoxysilane, dicyclohexyldiethoxysilane, diphenyldimethoxysilane and diphenyldiethoxysilane,

Furthermore, specific examples of the organosilanes in which n is 3 in general formula (1) include trimethylmethoxysilane, trimethylethoxysilane, triethylmethoxysilane and triethylethoxysilane.

The above organosilanes represented by general formula (1) can be used either alone or as a mixture of two or more of them.

Of the above organosilanes, preferred are tetraalkoxysilanes in which n is 0, trialkoxysilanes in which n is 1, and dialkoxysilanes in which n is 2. Of these, tetramethoxysilane and tetraethoxysilane are preferred as the tetraalkoxysilanes, methyltrimethoxysilane and methyltriethoxysilane are preferred as the trialkoxysilanes, and dimethyldimethoxysilane and dimethyldiethoxysilane are preferred as the dialkoxysilanes.

In the present invention, only the tetraalkoxysilane, a combination of 40 to 95% by weight of the tetraalkoxysilane and 5 to 60% by weight of the trialkoxysilane, only the trialkoxysilane, or a combination of 40 to 95 % by weight of the trialkoxysilane and 60 to 5 % by weight of the dialkoxysilane is preferred as the above-mentioned organosilane.

In component (B) of the present invention, the above-mentioned organosilane is used as it is, or as the hydrolyzate and/or the condensate. When the above-mentioned organosilane is employed as the hydrolyzate and/or the condensate, it can be previously hydrolyzed and condensed to use it as component (B). However, it is preferred that a proper amount of water is added in mixing organosilane (1) with the remainder components to prepare a composition as described later, thereby hydrolyzing and condensing organosilane (1) to yield component (B).

When component (B) is used as the hydrolyzate/condensate (the hydrolyzate and/or condensate of the oganosilane), the Mw of the hydrolyzate/condensate is usually from 800 to 100,000, and preferably from 1,000 to 50,000. The Mw of component (B) composed of the hydrolyzate/condensate is appropriately selected according to the film forming properties of the composition, or the hardness or flexibility of the coating film.

The above-mentioned hydrolyzate/condensate can be obtained not only by hydrolyzing and/or condensing organosilane (1), but also by hydrolyzing and/or condensing a chlorosilane compound such as methyltrichlorosilane, ethyltrichlorosilane, phenyltrichlorosilane, dimethyldichlorosilane, diethyldichlorosilane or diphenyldichlorosilane.

Commercially available products of the hydrolyzates/condensates of component (B) include MKC Silicate manufactured by Mitsubishi Chemical Corporation, Silicate manufactured by Tama Chemicals Co., Ltd., a silicon resin manufactured by Dow Corning Toray Silicone Co., Ltd., a silicon resin manufactured by Toshiba Silicone Co. and a silicon oligomer manufactured by Nippon Unicar Company Limited.

In the composition of the present invention, components (B) can be used either alone or as a mixture of two or more of them.

As to the ratio of polymer (A) to component (B) in composition (2), the amount of polymer (A) is from 20 to 900 parts by weight, and preferably from 50 to 400 parts by weight, based on 100 parts by weight of component (B) [converted to a complete hydrolyzate/condensate of organosilane (1)]. Less than 20 parts by weight leads to failure to exhibit the desired ultraviolet absorbing ability in some cases, whereas exceeding 900 parts by weight results in the tendency of long-term weather resistance of a coating film to deteriorate.

The complete hydrolyzate/condensate of organosilane (1) means a product in which 100% of R²O- groups of organosilane (1) are hydrolyzed to SiOH groups, which are further completely condensed to give a siloxane structure.

When composition (2) is prepared, water and/organic solvent (C) is usually added.

In composition (2), the above-mentioned component (A) and component (B) are indispensable, and components (D) to (G) described later are contained, as the case may be. Usually, when the composition is prepared, water (C) is added for hydrolysis and condensation of organosilane (1), or for dispersion of granular components.

The amount of water used in composition (2) is usually from about 0.1 to about 3 moles, and preferably from about 0.2 to about 2 moles, based on mole of OR² contained in organosilane (1) constituting component (B).

Organic solvent (C) in composition (2) is used mainly for uniformly mixing components (A) and (B), and components (D) to (G) used as required, adjusting the total solid concentration of the composition, permitting the composition to be applicable to various coating methods, and further improving the dispersion stability and storage stability of the composition. There is no particular limitation on such organic solvents, as long as they can uniformly mix the above-mentioned compositions. Examples thereof include, for example, alcohols, aromatic hydrocarbons, ethers, ketones and esters.

Of these organic solvents, specific examples of the alcohols include methanol, ethanol, n-propyl alcohol, i-propyl alcohol, n-butyl alcohol, sec-butyl alcohol, t-butyl alcohol, n-hexyl alcohol, n-octyl alcohol, ethylene glycol, diethylene glycol, triethylene glycol, ethylene glycol monobutyl ether and ethylene glycol monoethyl ether acetate.

Specific examples of the aromatic hydrocarbons include benzene, toluene and xylene. Specific examples of the ethers include tetrahydrofuran and dioxane. Specific examples of the ketones include acetone, methyl ethyl ketone, methyl isobutyl ketone and diisobutyl ketone. Specific examples of the esters include ethyl acetate, propyl acetate, butyl acetate and propylene carbonate.

This organic solvent is usually used in such an amount that the total solid concentration of composition (2) becomes 50% by weight or less, as described later.

The total solid concentration of composition (2) is preferably 50% by weight or less, and properly adjusted depending on the purpose of application. For example, for thin film formation, it is usually from 5 to 30% by weight. For thick film formation, it is usually from 20 to 50% by weight, and preferably from 30 to 45% by weight. When the total solid concentration of composition exceeds 50% by weight, the storage stability tends to deteriorate.

The following components (D) to (G) can be added to the compositions (compositions (1) and (2)) of the present invention.

### Component (D)

Component (D) is a catalyst for enhancing the hydrolysis and condensation reaction of components (A) and (B).

In the present invention, the use of component (D) accelerates the curing rate of the resultant coating film and increase the molecular weight of polymer (A) and the polysiloxane resin produced by the polycondensation reaction of the hydrolytic organosilane component, hence allowing the resultant coating layer to be improved in strength and long-term durability, and increasing the thickness of the coating film and facilitating the coating operation.

Such component (D) is preferably an acidic compound, a basic compound, a salt compound, an amine compound, an organometallic compound and/or a partial hydrolyzate thereof (the organometallic compound and/or the partial hydrolyzate thereof is hereinafter also collectively referred to as an "organometallic compound, etc.").

Of compound (D), the acidic compounds include, for example, acetic acid, hydrochloric acid, sulfuric acid, phosphoric acid, alkyltitanic acids, p-toluenesulphonic acid and phthalic acid, and preferred is acetic acid.

Further, the basic compounds include, for example, sodium hydroxide and potassium hydroxide, and preferred is sodium hydroxide.

Furthermore, the salt compounds include, for example, alkali metal salts of naphthenic acid, octylic acid, nitrous acid, sulfurous acid, aluminic acid and carbonic acid.

The amine compounds include, for example, various modified amines used as curing agents for epoxy resins, as well as ethylenediamine, hexamethylenediamine, diethylenetriamine, triethylenetetramine, tetraethylenepentamine, piperidine, piperadine, m-phenylenediamine, p-phenylenediamine, ethanolamine, triethylamine, 3-aminopropyltrimethoxysilane, 3-aminopropyltriethoxysilane, 3-(2-aminoethyl)aminopropyltrimethoxysilane, 3-(2-aminoethyl)aminopropyltriethoxysilane, 3-(2-aminoethyl)aminopropylmethylenedimethoxysilane, 3-anilinopropyltrimethoxysilane, alkylamine salts and quaternary ammonium salts, and preferred are 3-aminopropyltrimethoxysilane, 3-aminopropyltriethoxysilane and 3-(2-aminoethyl)aminopropyltriethoxysilane.

The organometallic compounds, etc. include, for example, compounds represented by the following general formula (hereinafter also referred to as "organometallic compounds"), organometallic compounds of tetravalent tin each having 1 or 2 alkyl groups each having 1 to 10 carbon atoms, the alkyl groups being bonded to the same tin atom (hereinafter referred to as "organic tin compounds"), and partial hydrolyzates of these compounds.

M(OR⁵)ₚ(R⁶COCHCOR⁷)q

wherein M represents zirconium, titanium or aluminum; R⁵ and R⁶ each independently represent a monovalent hydrocarbon group having 1 to 6 carbon atoms such as ethyl, n-propyl, i-propyl, n-butyl, sec-butyl, t-butyl, n-pentyl, n-hexyl, cyclohexyl or phenyl; R⁷ represents an alkoxyl group having 1 to 16 carbon atoms such as methoxy, ethoxy, n-propoxy, i-propoxy, n-butoxy, sec-butoxy, t-butoxy, lauryloxy or stearyloxy, as well as a monovalent hydrocarbon group having 1 to 6 carbon atoms as is the case with R⁵ and R⁶; and p and q are integers ranging from 0 to 4, and (p+q)=(valence of M).

Specific examples of the organometallic compounds, etc. include organic zirconium compounds such as tetra-n-butoxy-zirconium, ethylacetoacetate-zirconium-tri-n-butylate, bis-(ethylacetoacetate)-zirconium-di-n-butylate, tris(ethylacetoacetate)-zirconium-n-butylate, tetrakis(n-propylacetoacetate)-zirconium, tetrakis(acetylacetoacetate)-zirconium, and tetrakis(ethylacetoacetate)-zirconium; organic titanium compounds such as tetra-i-propoxytitanium, bis(ethylacetoacetate)-titanium-di-i-propylate, bis(acetylacetate)-titanium-di-i-propylate and bis(acetylacetone)-titanium-di-i-propylate; organic aluminum compounds such as tri-i-propoxyaluminum, ethylacetoacetate-aluminum-di-i-propylate, acetylacetonate-aluminum-di-i-propylate, bis(ethylacetoacetate)-aluminum-i-propylate, bis(acetylacetonate)-aluminum-i-propylate, tris(ethylacetoacetate)-aluminum, tris(acetylacetonate)-aluminum and bis(ethylacetoacetate)-aluminum-monoacetylacetonate; and (partial) hydrolyzates of these compounds.

Of these, preferred are ethylacetoacetate-zirconium-tri-n-butylate, bis(acetylacetonate)-titanium-di-i-propylate, ethylacetoacetate-aluminum-di-i-propylate, tris(ethylacetoacetate)-aluminum and (partial) hydolyzates of these compounds.

Specific examples of the organic tin compounds include:
carboxylic acid type organic tin compounds such as
   (C₄H₉)₂Sn(OCOC₁₁H₂₃)₂,
   (C₄H₉)₂Sn(OCOCH=CHCOOCH₃)₂,
   (C₄H₉)₂Sn(OCOCH=CHCOOC₄H₉)₂,
   (C₈H₁₇)₂Sn(OCOC₈H₁₇)₂,
   (C₈H₁₇)₂Sn(OCOC₁₁H₂₃)₂,
   (C₈H₁₇)₂Sn(OCOCH=CHCOOCH₃)₂,
   (C₈H₁₇)₂Sn(OCOCH=CHCOOC₄H₉)₂,
   (C₈H₁₇)₂Sn(OCOCH=CHCOOC₈H₁₇)₂,
   (C₈H₁₇)₂Sn(OCOCH=CHCOOC₁₆H₃₃)₂,
   (C₈H₁₇)₂Sn(OCOCH=CHCOOC₁₇H₃₅)₂,
   (C₈H₁₇)₂Sn(OCOCH=CHCOOC₁₈H₃₇)₂,
   (C₈H₁₇)₂Sn(OCOCH=CHCOOC₂₀H₄₁)₂, 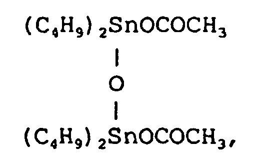 (C₄H₉)Sn(OCOC₁₁H₂₃)₃, and
   (C₄H₉)Sn(OCONa)₃;
   mercaptide type organic tin compounds such as
   (C₄H₉)₂Sn(SCH₂COOC₈H₁₇)₂,
   (C₄H₉)₂Sn(SCH₂CH₂COOC₈H₁₇)₂,
   (C₈H₁₇)₂Sn(SCH₂COOC₈H₁₇)₂,
   (C₈H₁₇)₂Sn(SCH₂CH₂COOC₈H₁₇)₂,
   (C₈H₁₇)₂Sn(SCH₂COOC₁₂H₂₅)₂,
   (C₈H₁₇)₂Sn(SCH₂CH₂COOC₁₂H₂₅)₂,
   (C₄H₉)Sn(SCOCH=CHCOOC₈H₁₇)₃,
   (C₈H₁₇)Sn(SCOCH=CHCOOC₈H₁₇)₃, and 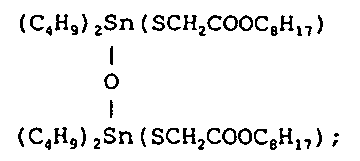
sulfide type organic tin compounds such as
   (C₄H₉)₂Sn=S, (C₈H₁₇)₂Sn=S, and 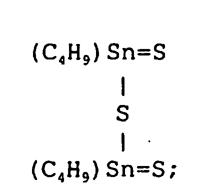
chloride type organic compounds such as
   (C₄H₉)SnCl₃, (C₄H₉)₂SnCl₂,
   (C₈H₁₇)₂SnCl₂, and 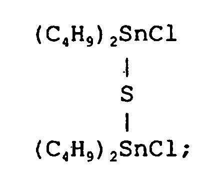 and
   organic tin oxides such as (C₄H₉)₂SnO and (C₈H₁₇)₂SnO, and reaction products of these organic tin oxides and ester compounds such as ethyl silicate, dimethyl maleate, diethyl maleate and dioctyl phthalate.

Components (D) can be used either alone or as a mixture of two or more of them, and can also be used as a mixture with zinc compounds or other reaction retardants.

Component (D) may also be added in preparing the composition or at a stage where a coating film is formed or at both the stages of the preparation of the composition and the formation of the coating film.

The amount of component (D) used in the composition of the present invention is usually 10 moles or less, preferably from 0.01 to 5 moles, and more preferably from 0.001 to 2 moles, based on mole of the total amount of OR contained in specific silyl group (a1) of the above-mentioned component (A) and OR² contained in organosilane (1) constituting component (B), for the compounds other than the organometallic compounds, etc. In the case of the organometallic compounds, etc., the amount of component (D) used is usually 10 moles or less, preferably from 0.001 to 7 moles, and more preferably from 0.001 to 5 moles, based on mole of the total amount of OR contained in specific silyl group (a1) of the above-mentioned component (A) and OR² contained in organosilane (1) constituting component (B). In this case, when the amount of component (D) used exceeds 10 moles, the composition tends to deteriorate in storage stability, and cracks are liable to be developed in the resultant coating film.

### Component (E)

Component (E) is at least one selected from the group consisting of β-diketones and/or β-ketoesters represented by the following general formula, carboxylic acid compounds, dihydroxy compounds, amine compounds and oxyaldehyde compounds.

R⁸COCH₂COR⁹

wherein, R⁸ and R⁹ each have the same meanings as given for R⁶ and R⁷ of the general formula in the above-mentioned organometallic compounds, etc. Such component (E) is preferably used in combination, particularly when of the above-mentioned component (D), the organometallic compound, etc. is used.

Component (E) serves as a stability enhancing agent for the composition. That is to say, it is presumed that component (E) coordinates to a metallic atom in the organometallic compound, etc. to appropriately control the action for promoting the condensation reaction of the above-mentioned component (B) or the copolycondensation reaction of component (A) with component (B) according to the organometallic compound, etc., thereby acting so as to further improve the storage stability of the resultant composition.

Specific examples of component (E) include acetylacetone, methyl acetoacetate, ethyl acetoacetate, n-propyl acetoacetate, i-propyl acetoacetate, n-butyl acetoacetate, sec-butyl acetoacetate, t-butyl acetoacetate, hexane-2,4-dione, heptane-2,4-dione, heptane-3,5-dione, octane-2,4-dione, nonane-2,4-dione, 5-methylhexane-2,4-dione, malonic acid, oxalic acid, phthalic acid, glycolic acid, salicylic acid, aminoacetic acid, ethylenediaminetetraacetic acid, glycol, catechol, ethylenediamine, 2,2-bipyridine, 1,10-phenanthroline, diethylenetriamine, 2-ethanolamine, dimethylglyoxime, dithizone, methionine and salicylaldehyde. Of these, preferred are acetylacetone, ethyl acetoacetate and 2-ethanolamine.

The above components (E) can be used either alone or as a mixture of two or more of them.

The amount of component (E) used in the composition of the present invention is usually 2 moles or more, and preferably from 3 to 20 moles, based on mole of the organometallic compound in the above-mentioned organometallic compound, etc. In this case, when the amount of component (E) used is less than 2 moles, the effect of improving the storage stability of the resultant composition tends to become insufficient.

### Component (F)

Component (F) is an addition type ultraviolet absorber and/or ultraviolet stabilizer, and at least one selected from fine semiconductor particles having ultraviolet absorbing ability, and an addition type organic ultraviolet absorber and organic ultraviolet stabilizer. Component (F) can be used for supplementing ultraviolet absorbing ability within the range in which the characteristics of the composition of the present invention are not impaired.

The semiconductors having ultraviolet absorbing ability include, for example, rutile crystal type TiO₂, ZnO and CeO₂, and preferred are ZnO and CeO₂.

As the existing forms of the above-mentioned fine semiconductor particles, there are tree kinds of a fine particle powder, an aqueous sol in which the fine particles are dispersed in water, and a solvent sol in which the fine particles are dispersed in a polar solvent such as isopropyl alcohol or a nonpolar solvent such as toluene. The solvent sol may be further diluted with water or a solvent depending on the dispersibility of the fine semiconductor particles. From the viewpoint of the ultraviolet absorbing ability, it is preferred that the average particle size of the fine semiconductor particles in these existing forms is smaller. It is usually 1 µm or less, preferably 0.5 *µ*m or less and particularly preferably 0.1 *µ*m or less. An ultraviolet absorber which has ultraviolet absorbing ability equivalent to that of the organic ultraviolet absorber and can be semipermanently used without deterioration can be obtained by reducing the fine semiconductor particles in size. Further, the fine semiconductor particles are good in uniform dispersibility, so that a coating composition excellent in transparency and storage stability can be obtained. For improving dispersibility and storage stability and preventing photocatalytic activity, surfactants, dispersing agents and coupling agents are preferably added to these fine particles and sol, which are also preferably surface treated therewith. When the above-mentioned fine semiconductor particles are used in the aqueous sol or solvent sol form, the solid concentration thereof is preferably 60% by weight or less, and more preferably 50% by weight or less.

As a method for adding the above-mentioned fine semiconductor particles to the composition of the present invention, they may be added after the preparation of other components, or can be added in preparing the composition of the present invention, followed by hydrolysis and condensation of components (A) and (B) in the presence of the above-mentioned fine semiconductor particles. When the fine semiconductor particles having ultraviolet absorbing ability are added in preparing the composition, a semiconductor compound contained in the fine semiconductor particles can be co-condensed with components (A) and (B), thereby allowing the dispersibility of the fine semiconductor particles to be improved. When the above-mentioned fine semiconductor particles are used in the aqueous sol form, they are preferably added in preparing the composition. Further, when the viscosity in a system is increased by addition of the above-mentioned component (E), the above-mentioned fine semiconductor particles are also preferably added in preparing the composition.

Commercially available products of the fine semiconductor particles having ultraviolet absorbing ability include TIPAQUE TTO manufactured by Ishihara Sangyo Kaisha, Ltd., ZW-143, ZW-513C, ZS-300, ZS-303, ZnO-100 and ZnO-200 manufactured by Sumitomo Osaka Cement Co., Ltd., Z-NOUVE manufactured by Mitsui Mining & Smelting Co., Ltd., NEEDRAL manufactured by Taki Chemical Co., Ltd., and CERIGUARD and HIGH-CERA SUPER K-29 manufactured by Nippon Inorganic Colour & Chemical Co., Ltd.

On the other hand, the addition type organic ultraviolet absorbers and organic ultraviolet stabilizers of component (F) include salicylic acid compounds, benzophenone compounds, benzotriazole compounds, cyanoacrylate compounds and triazine compounds. Further, the ultraviolet stabilizers include piperidine compounds.

In the coating composition for undercoating of the present invention, component (F) can be used either alone or as a mixture of two or more of them.

In the coating composition for undercoating of the present invention, the amount of component (F) used is usually 100 parts by weight or less, and preferably 50 parts by weight or less, in terms of the solid content, based on 100 parts by weight of the total amount of organosilane (1) (converted to a complete hydrolyzate/condensate) constituting polymer (A) and component (B). Exceeding 100 parts by weight results in deterioration of the film forming properties of the resultant composition and development of cracks and separation in some cases.

### Component (G)

Component (G) is a powder and/or a sol or a colloid of an inorganic compound having no ultraviolet absorbing ability, and mixed according to the desired properties of the coating film. When component (G) is in the sol or colloid form, the average particle size thereof is usually from about 0.005 to about 100 µm.

Specific examples of the compounds constituting component (G) include SiO₂, Al₂O₃, AlGaAs, Al(OH)₃, Sb₂O₅, Si₃N₄, Sn-In₂O₃, Sb-In₂O₃, MgF, CeF₃, BeO, SiC, AlN, Fe, Co, Co-FeOₓ, CrO₂, Fe₄N, BaTiO₃, BaO-Al₂O₃-SiO₂, Ba ferrite, SmCO₅, YCO₅, CeCO₅, PrCO₅, Sm₂CO₁₇, Nd₂Fe₁₄B, Al₄O₃, α-Si, SiN₄, CoO, Sb-SnO₂, Sb₂O₅, MnO₂, MnB, Co₃O₄, Co₃B, LiTaO₃, MgO, MgAl₂O₄, BeAl₂O₄, ZrSiO₄, ZnSb, PbTe, GeSi, FeSi₂, CrSi₂, CoSi₂, MnSi_{1.73}, Mg₂Si, β-B, BaC, BP, TiB₂, ZrB₂, HfB₂, Ru₂Si₃, TiO₃, PbTiO₃, Al₂TiO₅, Zn₂SiO₄, Zr₂SiO₄, 2MgO₂-Al₂O₃-5SiO₂, Nb₂O₅, Li₂O-Al₂O₃-4SiO₂, Mg ferrite, Ni ferrite, Ni-Zn ferrite, Li ferrite and Sr ferrite.

These components (G) can be used either alone or as a mixture of two or more of them.

As the existing forms of component (G), there are a powder, an aqueous sol or colloid in which component (G) is dispersed in water, and a solvent sol or colloid in which component (G) is dispersed in a polar solvent such as isopropyl alcohol or a nonpolar solvent such as toluene. The solvent sol or colloid may be further diluted with water or a solvent for use depending on the dispersibility of the semiconductor, or component (G) may be surface treated for improving the dispersibility.

When component (G) is in the aqueous sol or colloid form, or in the solvent sol or colloid form, the solid concentration is preferably 40% by weight or less.

As a method for adding component (G) to the composition of the present invention, component (G) may be added after the preparation of the composition or may be added in preparing the composition, thereby allowing component (G) to be co-hydrolyzed and co-condensed with the above-mentioned component (A) and component (B).

The amount of component (G) used is usually 200 parts by weight or less, and preferably 100 parts by weight or less, in terms of the solid content, based on 100 parts by weight of the total amount of organosilane (1) (converted to a complete hydrolyzate/condensate) constituting polymer (A) and component (B).

### Other Additives

Appropriate fillers may be separately added to and dispersed in the coating compositions of the present invention for coloring and increasing the thickness of the resultant coating films.

Such fillers include, for example, water-insoluble organic and inorganic pigments, granular, fibrous or scaly ceramics, metals and alloys, oxides, hydroxides, carbides, and nitrides and sulfides of these metals.

Specific examples of the above-mentioned fillers include iron, copper, aluminum, nickel, silver, zinc, ferrite, carbon black, stainless steel, silicon dioxide, titanium dioxide, manganese oxide, iron oxide, synthetic mullite, aluminum hydroxide, iron hydroxide, silicon carbide, silicon nitride, boron nitride, clay, diatom earth, slaked lime, gypsum, talc, barium carbonate, calcium carbonate, magnesium carbonate, barium sulfate, bentonite, mica, zinc green, chrome green, cobalt green, viridian, Guignet's green, cobalt chrome green, shale green, green soil, manganese green, pigment green, ultramarine, Prussian blue, pigment green, rocky blue, cobalt blue, cerulean blue, copper borate, molybdenum blue, copper sulfide, cobalt purple, mars violet, manganese purple, pigment violet, lead suboxide, calcium plumbate, zinc yellow, lead sulfide, chrome yellow, yellow soil, cadmium yellow, strontium yellow, titanium yellow, litharge, pigment yellow, copper suboxide, cadmium red, selenium red, chrome vermilion, Indian red, zinc white, antimony white, basic lead sulfate, titanium white, lithopone, lead silicate, zirconium oxide, tungsten white, lead, zinc white, Bantison white, lead phthalate, manganese white, lead sulfate, graphite, bone black, diamond black, Thermatomic black, plant black, potassium titanate whisker and molybdenum disulfide.

The amount of the filler used is usually 300 parts by weight or less, based on 100 parts by weight of the total solid content of the composition of the present invention.

Further, the compositions of the invention can also contain other additives such as surfactants, silane coupling agents, titanium coupling agents and dyes, as well as known dehydrating agents such as methyl orthoformate, methyl orthoacetate and tetraethoxysilane; dispersing agents such as poly(oxyethylene alkyl ethers), poly(oxyethylene alkyl phenyl ethers), poly(oxyethylene esters of fatty aids), fluoroalkyl esters, fluoroalkyl ethers, poly(carboxylic acid) polymer surfactants, polycarboxylates, polyphosphates, polyacrylates, polyamide esters and polyethylene glycol; thickening agents including cellulose derivatives such as methyl cellulose, ethyl cellulose, hydroxyethyl cellulose, hydroxypropyl cellulose and hydroxypropylmethyl cellulose, castor oil derivatives and ferrosilicates; inorganic foaming agents such as ammonium carbonate, ammonium bicarbonate, ammonium nitrite, sodium boron hydride and calcium amide; and organic foaming agents including azo compounds such as azobisisobutyronitrile, hydrazine compounds such as diphenylsulfone-3,3'-disulfohydrazine, semicarbazide compounds, triazole compounds and N-nitroso compounds, as desired.

Further, leveling agents can be added for more improving the coating performance of the coating compositions of the present invention. Of such leveling agents, fluorine leveling agents include, for example, BM1000 and BM1100 manufactured by BM-Chemie, EFCA 772 and EFCA 777 manufactured by Efca Chemicals, a FLORENCE series manufactured by Kyoeisha Kagaku Co., an FC series of SUMITOMO 3M LIMITED, and a FLUONAL TF series of Toho Chemical Industry Co., Ltd., and a MEGAFAC series manufactured by DAINIPPON INK AND CHEMICALS, INC. Further, silicone leveling agents include, for example, a BYK series manufactured by BYK Chemie, and Efca 30, Efca 31, Efca 34, Efca 39, Efca 83, Efca 86 and Efca 88 manufactured by Efca Chemicals. Ether or ester leveling agents include, for example, SURFYNOL manufactured by Air Products Japan, Ltd., and EMARGEN and HOMOGENOL manufactured by KAO CORPORATION.

Compounding of such leveling agents improves the finished appearance of coating films and allows uniform coating also in the formation of thin films.

The amount of the leveling agent used is preferably from 0.01 to 5% by weight, and more preferably from 0.02 to 3% by weight, based on the composition (converted to the solid content) of the present invention.

As a method for adding the leveling agent, it may also be added in preparing the composition of the present invention or at a stage where a coating film is formed or at both the stages of the preparation of the composition and the formation of the coating film.

### Preparation of the Composition of the Present Invention

In preparing the composition of the invention, when component (E) is not used, a mixing method of the respective components is not particularly limited. However, when component (E) is used, a method is preferably employed in which a mixture of components excluding component (E) from components (A) to (G) is obtained, followed by addition of component (E) thereto.

In the present invention, components other than components (A) to (G) can be added at appropriate stages during the preparation of the composition.

### Coating Composition for Overcoating

When the coating composition of the present invention are used in the undercoat layers, suitable examples of the coating compositions for overcoating include various compositions such as a coating composition for overcoating of (1) or (2) described below:
(1) Coating composition for overcoating comprising the above-mentioned composition (B) (hereinafter also referred to as "overcoating composition (1)"); and
(2) Coating composition for overcoating comprising the above-mentioned composition (B) and polymer (A) containing silyl group (a1) having a silicon atom bound to a hydrolytic group and/or a hydroxyl group (hereinafter also referred to as "overcoating composition (2)").

### Overcoating Composition (1)

Overcoating composition (1) includes a composition in which the above-mentioned component (B) is dissolved or dispersed in water and/or organic solvent (C).

The kind and amount of component (B) and component (C) are the same as with those in the coating composition of the present invention, so that the description thereof is omitted.

That is to say, overcoating composition (1) has the composition that polymer (A) is excluded from the composition of the present invention.

### Overcoating Composition (2)

Overcoating composition (2) includes a composition containing the above-mentioned component (B) and a polymer having specific silyl group (a1) in a polymer chain (hereinafter also referred to as "silyl group-containing polymer (x)").

Here, component (B) is the same as component (B) used in the coating composition of the present invention. Further, silyl group-containing polymer (x) is a polymer having specific silyl group (a1) as an indispensable component, of component (A) used in the coating composition of the present invention. In other words, silyl group-containing polymer (x) may have ultraviolet absorptive group (a2) and ultraviolet stable group (a3) in the same polymer chain or not. The others are the same as with component (A). In overcoating composition (2), copolycondensation of component (B) and specific silyl group (a1) contained in silyl group-containing polymer (X) brings about excellent coating film performance.

Also in overcoating composition (2), the ratio of component (B) to component (x) is the same as that of component (B) to component (A) in the coating composition of the present invention.

That is to say, overcoating composition (2) has the composition that polymer (A) in the coating composition of the present invention is substituted by silyl group-containing polymer (X).

### Other Coating Compositions for Overcoating

It is also possible to use fluorine coating compositions for overcoating as the above-mentioned coating compositions for overcoating applied in the present invention. The fluorine coating compositions for overcoating gives a soil-resistant effect to the resultant coating films by their water-repellent and oil-repellent actions.

Similarly to the coating compositions of the present invention, the above-mentioned components (D) to (G) and other additives can be added to the above-mentioned coating compositions for overcoating.

### Coating Method

When the composition of the present invention is applied onto the substrate, coating film having a thickness of about 0.05 to about 40 µm in one application, or a thickness of about 0.1 to about 80 µm in two or three applications can be formed by use of a brush, a (micro) gravure coater, a roll coater, a flow coater, a centrifugal coater or an ultrasonic coater, or by dip coating, flow coating, spray coating, a screen process, electrodeposition or vapor deposition. Then, the composition applied onto the substrate is dried at room temperature, or heated at a temperature of about 30°C to about 200°C for about 0.5 minute to 60 minutes to dry it. Thus, the coating films can be formed on various kinds of substrates.

As to the above-mentioned coating compositions for overcoating, coating films having a dry thickness of about 0.05 to about 20 µm in one application, or a dry thickness of about 0.1 to about 40 µm in two applications can be formed. Then, they are dried at ordinary temperature, or heated at a temperature of about 30°C to about 200°C to dry them, thereby being able to form the coating films on various substrates.

The total thickness of the undercoat layer and the overcoat layer is usually from about 0.1 to about 80 µm, and preferably from about 0.2 to about 60 µm, by the dry thickness.

Materials for the substrates to which the compositions of the present invention are applicable include, for example, metals such as iron, aluminum and stainless steel; inorganic ceramic materials such as cement, concrete, ALC, flexible boards, mortar, slate, gypsum, ceramics and brick; shaped articles of plastics such as phenol resins, epoxy resins, acrylic resins, polyesters, polycarbonates, polyethylene, polypropylene and ABS resins (acrylonitrile-butadiene-styrene resins); films of plastics such as polyethylene, polypropylene, polyvinyl alcohol, polycarbonates, poly-ethylene terephthalate, polyurethanes, polyimides, poly-ethylene naphthalate, polytetrafluoroethylene, polyether ether ketones, polyparapheylene sulfides, polyether imides, polyparabanic acid, polyether sulfones, polyparaphenylene terephthalamide and plastic norbornene resins such as ring-opening norbornene polymers, addition norbornene polymers and hydrogen addition products thereof; organic-inorganic composite materials comprising composites of silyl-modified products of the above-mentioned resins and inorganic components; wood; paper; and glass. In particular, when the plastic substrates are used, deterioration of the substrates due to ultraviolet rays can be inhibited, and long-term adhesion can be secured. The compositions of the invention are also useful for repainting of deteriorated coating films.

The substrates can also be preliminarily surface treated for base preparation, improvement in adhesion, sealing of porous substrates, smoothing and patterning.

The surface treatments to the metallic substrates include, for example, polishing, degreasing, treatment for giving alkali resistance, electrolytic treatment, plating treatment, chromate treatment, flame treatment and coupling treatment. The surface treatments to the plastic substrates include, for example, blast treatment, treatment with chemicals, degreasing, treatment for giving alkali resistance, flame treatment, oxidation treatment, vapor treatment, corona discharge treatment, ultraviolet irradiation treatment, plasma treatment and ion treatment. Further, the surface treatments to the inorganic ceramic substrates include, for example, polishing, sealing and patterning. Still further, the surface treatments to the wood substrates include, for example, polishing, sealing and insect proofing treatment. Furthermore, the surface treatments to the paper substrates include, for example, sealing and insect proofing treatment. The surface treatments to the deteriorated coating films include, for example, polishing.

The coating operation of the composition of the present invention varies depending on the kind and state of substrate and the coating method. For example, in the case of the metallic substrates, primers are used, if rust prevention is required. In the case of the inorganic ceramic substrates, the covering properties of the coating films vary depending on the characteristics (such as surface roughness, impregnation properties and alkalinity) of the substrates, so that primers are usually employed. Further, in repainting deteriorated coating films, when the deterioration of the old coating films is significant, primers are used.

In the case of other substrates such as plastics, wood, paper and glass, primers may be used or not, depending on their application.

There is no particular limitation on the kind of primer, as long as it has the function of enhancing the adhesion between the substrate and the composition, and it is selected depending on the kind and purpose of application of substrate. The primers can be used either alone or as a mixture of two or more of them. They may be either enamel containing coloring components, or clear one containing no coloring components.
Examples of the primers include alkyd resins, aminoalkyd resins, epoxy resins, polyesters, acrylic resins, urethane resins, fluororesins, acrylic silicone resins, silicone resins, acrylic resin emulsions, epoxy resin emulsions, polyurethane emulsions, polyester emulsions, silicone-acrylic resin emulsions and fluororesin emulsions. When the adhesion is required between the substrates and the coating films under severe conditions, various functional groups can also be imparted to these primers. Such functional groups include, for example, a hydroxyl group, a carboxyl group, a carbonyl group, an amido group, an amine group, a glycidyl group, an alkoxysilyl group, an ether bond and an ester bond.

### Cured products

The compositions of the present invention are applied to the substrates to form the following cured products:
(a) Substrate/coating composition of the present invention (clear, enamel);
(b) Substrate/another coating agent/coating composition of the present invention (clear);
(c) Substrate/coating composition of the present invention (clear, enamel)/another coating agent;
(d) Substrate/coating composition of the present invention (clear, enamel)/coating composition for overcoating;
(e) Substrate/another coating agent/coating composition of the present invention (clear)/coating composition for overcoating; and
(f) Substrate/coating composition of the present invention (clear, enamel)/another coating agent/coating composition for overcoating.

The term "clear" as used herein means a composition containing no coloring component, and "enamel" means a composition containing a coloring component.

In the case of the above (a) to (c), it is as described above that the substrate can be preliminarily provided with the primer layer using another coating agent.

The cured products of the present invention can be protected against deterioration of the substrates caused by ultraviolet rays for a long period of time to prevent cracks and separation thereof.

The coating compositions and cured products of the present invention are excellent in storage stability, excellent in coating appearance, adhesion and weather resistance, high in hardness, have ultraviolet absorbing ability, and show no bleedout of ultraviolet absorbers, so that they have no deterioration of ultraviolet absorbing ability, and can prevent deterioration of grounds or substrates. Accordingly, the coating compositions of the present invention are extremely highly balanced in characteristics as organosilane coating materials.

The invention will be illustrated with reference to examples in more detail below, but the following examples are not intended to limit the scope of the invention.

Parts and percentages in the examples and comparative examples are on a weight basis, unless otherwise specified.

Various measurements and evaluations in the examples and comparative examples were made as follows:

### Mw

The Mw was measured by gel permeation chromatography (GPC) according to the following conditions:
Sample: A sample was prepared by dissolving 1 g of an organosilane condensation product or 0.1 g of a silyl group-containing polymer to be measured in 100 cc of tetrahydrofuran.
Standard polystyrene: Standard polystyrene manufactured by Pressure Chemical Co., Ltd., USA was used.
Apparatus: High temperature and high speed gel permeation chromatogram (model 150-C ALC/GPC, manufactured by Waters Co., Ltd., USA);
Column: SHODEX A-8M (50 cm in length) manufactured by Showa Denko K.K.;
Measuring temperature: 40°C;
Flow rate: 1 cc/minute.

### Storage Stability

A composition containing no curing accelerator was stored in a polyethylene bottle in the sealed state at ordinary temperature for 3 months, and then, the presence or absence of gelation was visually judged. For the composition in which no gelation occurred, the viscosity was measured with a BM type viscometer manufactured by TOKIMEC CO., LTD. When the rate of change thereof was within 20%, it was evaluated as "no change" (○), and when exceeded 20%, it was evaluated as "changed" (×).

### Adhesion

A tape peeling test was conducted three times by the cross-cut adhesion test (100 cross cuts) according to JIS K5400, and the adhesion was evaluated by an average of the number of cross cuts not separated.

### Hardness

The hardness was measured based on the pencil hardness according to JIS K5400.

### Transparency

Each composition for undercoating was applied onto quartz glass so as to form a coating film having a dry thickness of 10 µm. Then, the transparency of visible light was measured, and evaluated on the basis of the following criteria:
ⓞ: The permeability was 80% or more.
○: The permeability was from 60% to less than 80%.
Δ: The permeability was less than 60%.

### Ultraviolet Absorption

Each composition was applied onto quartz glass so as to form a coating film having a dry thickness of 5 *µ*m, and a curve of permeability was measured with a Hitachi recording spectrophotometer. The absorptivity at a wavelength of 290 to 350 nm was evaluated on the basis of the following criteria:
ⓞ: The absorptivity was 90% or more.
○: The absorptivity was from 80% to less than 90%.
Δ: The absorptivity was from 50% to less than 80%.
×: The absorptivity was less than 50%.

### Resistance to Bleedout

Each composition was applied onto quartz glass so as to form a coating film having a dry thickness of 5 µm, and allowed to stand at a temperature of 70°C and at a humidity of 70%. The rate of an ultraviolet absorbing agent remaining in the film was calculated from a change in a curve of ultraviolet ray permeability after 2 weeks, and evaluated on the basis of the following criteria:
ⓞ: The remaining rate was 98% or more.
○: The remaining rate was from 80% to less than 98%.
Δ: The remaining rate was from 50% to less than 80%.
×: The remaining rate was less than 50%.

### Weather Resistance

A 3,000-hour irradiation test was conducted using a sunshine weatherometer according to JIS K5400, and the appearance of the coating film (cracks and separation) and the appearance of the substrate were visually observed.

### Long-Term Adhesion

After a 3,000-hour irradiation test was conducted using a sunshine weatherometer according to JIS K5400, a tape peeling test was conducted three times, and the presence or absence of separation was evaluated on the basis of the following criteria:
○: No separation was observed.
Δ: Separation was observed in one or two tests.
×: Separation was observed in all three tests.

### Resistance to Scratch

After a 3,000-hour irradiation test was conducted using a sunshine weatherometer according to JIS K5400, the coating film was rubbed 10 times with a commercial gauze, and the appearance of the coating film was evaluated.
○: No scratch was observed.
Δ: Few scratches were observed.
×: Many scratches were observed.

### Reference Example 1 (Synthesis of Component (A))

In a reaction vessel equipped with a stirrer and a reflux condenser, 10 parts of methyl methacrylate, 10 parts of γ-methacryloxypropyltrimethoxysilane, 20 parts of glycidyl methacrylate, 20 parts of 4-(meth)acryloyloxy-2,2,6,6tetramethylpiperidine, 40 parts of 2-(2'-hydroxy-5'-meth-acryloxyethylphenyl)-2H-benzotriazole, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-1)"), the polymer having an Mw of 8,000. Reference Example 2 (Synthesis of Component (A))

In a reaction vessel equipped with a stirrer and a reflux condenser, 30 parts of methyl methacrylate, 10 parts of n-butyl acrylate, 10 parts of γ-methacryloxypropyltri-methoxysilane, 20 parts of glycidyl methacrylate, 10 parts of 4-(meth)-acryloyloxy-2,2,6,6-tetramethylpiperidine, 20 parts of 2-(2'-hydroxy-5'-methacryloxyethylphenyl)-2H-benzotriazole, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-2)"), the polymer having an Mw of 10,000.

### Reference Example 3 (Synthesis of Component (A))

In a reaction vessel equipped with a stirrer and a reflux condenser, 10 parts of methyl methacrylate, 10 parts of γ-methacryloxypropyltrimethoxysilane, 20 parts of glycidyl methacrylate, 20 parts of 4-(meth)acryloyloxy-2,2,6,6tetramethylpiperidine, 40 parts of 2-hydroxy-4-(methacryloyloxyethoxy)benzophenone, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-3)"), the polymer having an Mw of 10,000.

### Reference Example 4 (Synthesis of Component (A))

In a reaction vessel equipped with a stirrer and a reflux condenser, 30 parts of methyl methacrylate, 10 parts of n-butyl acrylate, 10 parts of γ-methacryloxypropyltrimethoxysilane, 20 parts of glycidyl methacrylate, 10 parts of 4-(meth)-acryloyloxy-2,2,6,6-tetramethylpiperidine, 20 parts of 2-hydroxy-4-(methacryloyloxyethoxy)benzophenone, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-4)"), the polymer having an Mw of 12,000.

### Reference Example 5 (Synthesis of Component (A))

In a reaction vessel equipped with a stirrer and a reflux condenser, 10 parts of methyl methacrylate, 10 parts of γ-methacryloxypropyltrimethoxysilane, 20 parts of 2-hydroxyethyl methacrylate, 20 parts of 4-(meth)acryloyloxy-2,2,6,6-tetramethylpiperidine, 20 parts of 2-(2'-hydroxy-5'-methacryloxyethylphenyl)-2H-benzotriazole, 20 parts of 2-hydroxy-4-(methacryloyloxyethoxy)benzophenone, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-5)"), the polymer having an Mw of 7,000.

### Reference Example 6 (Synthesis of Component (A))

In a reaction vessel equipped with a stirrer and a reflux condenser, 30 parts of methyl methacrylate, 10 parts of n-butyl acrylate, 10 parts of γ-methacryloxypropyltrimethoxysilane, 20 parts of 2-hydroxyethyl methacrylate, 10 parts of 4-(meth)-acryloyloxy-2,2,6,6-tetramethylpiperidine, 10 parts of 2-(2'-hydroxy-5'-methacryloxyethylphenyl)-2H-benzotriazole, 10 parts of 2-hydroxy-4-(methacryloyloxy-ethoxy)benzophenone, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-6)"), the polymer having an Mw of 14,000.

### Reference Example 7 (Synthesis of Component (A))

In a reaction vessel equipped with a stirrer and a reflux condenser, 30 parts of methyl methacrylate, 5 parts of n-butyl acrylate, 10 parts of *γ*-methacryloxypropyltrimethoxysilane, 20 parts of glycidyl methacrylate, 5 parts of 4-(meth)-acryloyloxy-2,2,6,6-tetramethylpiperidine, 30 parts of 2-(2'-hydroxy-5'-methacryloxyethylphenyl)-2H-benzotriazole, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(A-7)"), the polymer having an Mw of 9,000.

### Reference Example 8 (Synthesis of Silyl Group-Containing Vinyl Polymer (a))

In a reaction vessel equipped with a stirrer and a reflux condenser, 40 parts of methyl methacrylate, 10 parts of n-butyl acrylate, 20 parts of γ-methacryloxypropyltri-methoxysilane, 20 parts of 2-hydroxyethyl methacrylate, 10 parts of 4-(meth)acryloyloxy-2,2,6,6-tetramethylpiperidine, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours. Then, 83 parts of methyl ethyl ketone was added to obtain a polymer solution having a solid concentration of 30% (hereinafter referred to as "(a-1)"), the polymer having an Mw of 12,000.

### Reference Example 9 (Synthesis of Silyl Group-Containing Vinyl Polymer (a))

In a reaction vessel equipped with a stirrer and a reflux condenser, 45 parts of methyl methacrylate, 15 parts of n-butyl acrylate, 5 parts of cyclohexyl methacrylate, 5 parts of 2-ethylhexyl methacrylate, 12 parts of glycidyl methacrylate, 15 parts of γ-methacryloxypropyltrimethoxy-silane, 3 parts of 4-(meth)acryloyloxy-2,2,6,6-tetramethylpiperidine, 75 parts of i-butyl alcohol, 50 parts of methyl ethyl ketone and 25 parts of methanol were placed, and mixed. Then, the mixture was heated to 80°C with stirring, and a solution of 4 parts of azobisisovaleronitrile in 10 parts of xylene was added dropwise to the mixture for 30 minutes, followed by reaction at 80°C for 5 hours to obtain a polymer solution having a solid concentration of 40% (hereinafter referred to as "(a-2)"), the polymer having an Mw of 10,000.

### Example 1

In a reaction vessel equipped with a stirrer and a reflux condenser, 350 parts of (A-1) having a solid concentration of 30% as component (A), 149 parts of methyltrimethoxysilane and 51 parts of dimethyldimethoxysilane as component (B), 82 parts of methyl isobutyl ketone as component (C), and 16 parts of ethylacetoacetate-aluminum-di-i-propylate as component (D) were placed, and mixed. The temperature of the mixture was elevated to 50°C with stirring. Then, 39 parts of water was continuously added as component (C) for 30 minutes, followed by reaction at 60°C for 4 hours. Then, 13 parts of acetylacetone was added as component (E), and stirred for 1 hour, followed by cooling to room temperature. After the reaction was completed, 650 parts of methyl isobutyl ketone and 50 parts of ethylene glycol monobutyl ether were added as component (C) (diluting solvents) to obtain a composition of the present invention (hereinafter referred to "composition (I-1)").

### Examples 2 to 13

Compositions (I-2) to (I-13) of the present invention were obtained in the same manner as with Example 1 with the exception that respective components shown in Tables 1 and 2 were used.

**TABLE 1**

| Example | 1 | 2 | 3 | 4 | 5 | 6 | 7 |
|---|---|---|---|---|---|---|---|
| Name of Composition | I-1 | I-2 | I-3 | I-4 | I-5 | I-6 | I-7 |
| Mixing Component (parts) | | | | | | | |
| (A-1) | 350 | - | - | - | - | - | - |
| (A-2) | - | 350 | - | - | - | - | - |
| (A-3) | - | - | 350 | - | - | - | - |
| (A-4) | - | - | - | 350 | - | - | - |
| (A-5) | - | - | - | - | 350 | - | - |
| (A-6) | - | - | - | - | - | 350 | - |
| (A-7) | - | - | - | - | - | - | 350 |
| (B)Tetramethoxysilane | - | - | - | - | - | - | 171 |
| (B)Methyltrimethoxysilane | 149 | 149 | 149 | 149 | 149 | 149 | 71 |
| (B)Dimethyldimethoxysilane | 51 | 51 | 51 | 51 | 51 | 51 | - |
| (C) Water^{*2} | 39 | 39 | 39 | 39 | 39 | 39 | 39 |
| (C)Methyl Isobutyl Ketone^{*2} | 82 | 82 | 82 | 82 | 82 | 82 | 40 |
| (C)Methyl Isobutyl Ketone^{*3} | 650 | 200 | - | 250 | 300 | 100 | 700 |
| (C)Methyl Ethyl Ketone^{*3} | - | 300 | 300 | 300 | 350 | 350 | - |
| (C)Butyl Acetate ^{*3} | - | 100 | 200 | 100 | - | - | - |
| (C)Ethylene Glycol mono- | 50 | 50 | - | 50 | 50 | 50 | - |
| butyl Ether^{*3} | | | | | | | |
| (C)Isobutyl Alcohol^{*3} | - | 50 | 200 | - | - | 200 | - |
| (D)Ethylacetate-aluminum- | 16 | 16 | 16 | 16 | 16 | 16 | 16 |
| di-i-propylate | | | | | | | |
| | | | | | | | |

| After-Addition Component (parts) | | | | | | | |
|---|---|---|---|---|---|---|---|
| (E) Acetylacetone | 13 | 13 | 13 | 13 | 13 | 13 | 13 |

**TABLE 2**

| Example | 8 | 9 | 10 | 11 | 12 | 13 |
|---|---|---|---|---|---|---|
| Name of Composition | I-8 | I-9 | I-10 | I-11 | I-12 | I-13 |
| Mixing Component (parts) | | | | | | |
| (A-1) | - | - | - | - | - | - |
| (A-2) | 350 | - | - | 490 | - | - |
| (A-3) | - | - | - | - | - | - |
| (A-4) | - | 350 | - | - | 490 | - |
| (A-5) | - | - | - | - | - | - |
| (A-6) | - | - | 350 | - | - | - |
| (A-7) | - | - | - | - | - | 490 |
| (B) Methyltrimethoxysilane | 149 | 149 | 149 | 85 | 85 | 85 |
| (B) Dimethyldimethoxysilane | - | - | - | 34 | 34 | 34 |
| (B) Trifunctional Oligomer^{*1} | 32 | 32 | 32 | - | - | - |
| (C) Water^{*2} | 39 | 39 | 39 | 39 | 39 | 39 |
| (C) Methyl Isobutyl Ketone^{*2} | 101 | 101 | 101 | 23 | 23 | 23 |
| (C) Methyl Isobutyl Ketone^{*3} | 650 | 200 | 50 | 250 | 300 | 100 |
| (C) Methyl Ethyl Ketone^{*3} | - | 300 | 300 | 300 | 350 | 350 |
| (C) Butyl Acetate^{*3} | - | 100 | 300 | 100 | - | - |
| (C) Ethylene Glycol Monobutyl Ether^{*3} | 50 | 50 | 50 | 50 | 50 | 50 |
| (C) Isobutyl Alcohol^{*3} | - | 50 | - | - | - | 200 |
| (D) Ethylacetate-aluminum- | 16 | 16 | 16 | 16 | 16 | 16 |
| di-i-propoxy | | | | | | |
| | | | | | | |

| After-Addition Component (parts) | | | | | | |
|---|---|---|---|---|---|---|
| (E) Acetylacetone | 13 | 13 | 13 | 13 | 13 | 13 |
| (G) Colloidal Silica^{*4} | - | _ | _ | _ | - | 300 |
| In Tables 1 and 2, *1, *2, *3 and *4 are as follows: | | | | | | |

| | | | | | | |
|---|---|---|---|---|---|---|
| *1: Terminal alkoxysilyl group-containing trifunctional siloxane oligomer (Mw = 1,000) | | | | | | |
| *2: Added at the time of reaction | | | | | | |
| *3: Added after the completion of reaction and cooling | | | | | | |
| *4: Dispersion of Colloidal silica in methyl ethyl ketone (solid concentration: 20%) | | | | | | |

### Comparative Example 1

In a reaction vessel equipped with a stirrer and a reflux condenser, 350 parts of (a-1) having a solid concentration of 30%, 149 parts of methyltrimethoxysilane and 51 parts of dimethyldimethoxysilane as component (B), 82 parts of methyl isobutyl ketone as component (C), and 16 parts of ethylacetoacetate-aluminum-di-i-propylate as component (D) were placed, and mixed. The temperature of the mixture was elevated to 50°C with stirring. Then, 39 parts of water was continuously added as component (C) for 30 minutes, followed by reaction at 60°C for 4 hours. Then, 13 parts of acetylacetone was added as component (E), and stirred for 1 hour, followed by cooling to room temperature. After the reaction was completed, 650 parts of methyl isobutyl ketone and 50 parts of ethylene glycol monobutyl ether were added as diluting solvents. Thereafter, a solution of 53 parts of a benzophenone ultraviolet absorber, UVINUL 408 (manufactured by BASF Japan Ltd.), in 300 parts of methyl ethyl ketone was added to obtain a composition for comparison (hereinafter referred to "composition (i)").

### Examples 14 to 26 and Comparative Example 2

The storage stability of the respective compositions of the present invention and the composition for comparison were evaluated. On the other hand, 10 parts of a solution of dioctyl tin dimaleate ester in isobutanol (solid concentration: 15%) was added to 100 parts of each of the compositions of the present invention and the composition for comparison, and various evaluations were carried out. Results thereof are shown together in Tables 3 and 4.

### Example 27

To 100 parts of (A-1) obtained in Reference Example 1, 5 parts of a solution of dioctyl tin dimaleate ester in isobutanol (solid concentration: 15%) was added. Results thereof are shown together in Table 4.

**TABLE 3**

| Example | 14 | 15 | 16 | 17 | 18 | 19 | 20 | 21 |
|---|---|---|---|---|---|---|---|---|
| Composition | I-1 | I-2 | I-3 | I-4 | I-5 | I-6 | I-7 | I-8 |
| Storage Stability | ○ | ○ | ○ | ○ | ○ | ○ | ○ | ○ |
| Hardness | 3H | 3H | 3H | 3H | 3H | 3H | 4H | 4H |
| UV Absorption | ⓞ | ⓞ | ⓞ | ⓞ | ⓞ | ⓞ | ⓞ | ⓞ |
| Resistance to Bleedout | ⓞ | ⓞ | ⓞ | ⓞ | ⓞ | ⓞ | ⓞ | ⓞ |
| Transparency | ⓞ | ⓞ | ⓞ | ⓞ | ⓞ | ⓞ | ⓞ | ⓞ |

**TABLE 4**

| | Example | | | | | | Comparative Example 2 |
|---|---|---|---|---|---|---|---|
| | 22 | 23 | 24 | 25 | 26 | 27 | |
| Composition | I-9 | I-10 | I-11 | I-12 | I-13 | A-1 | i |
| Storage Stability | ○ | ○ | ○ | ○ | ○ | ○ | ○ |
| Hardness | 4H | 4H | 2H | 2H | 2H | - | 3H |
| UV Absorption | ⓞ | ⓞ | ⓞ | ⓞ | ⓞ | ⓞ | ⓞ |
| Resistance to Bleedout | ⓞ | ⓞ | ⓞ | ⓞ | ⓞ | ⓞ | × |
| Transparency | ⓞ | ⓞ | ⓞ | ⓞ | ⓞ | ⓞ | ⓞ |

### Examples 28 to 53

To 100 parts of each of the compositions of the present invention, 10 parts of a solution of dioctyl tin dimaleate ester in isobutanol (solid concentration: 15%) was added, and the resultant composition was applied onto each of substrates shown in Tables 5 and 6 and dried so as to form a coating film having a dry thickness of 3 µm, thereby forming a cured product. For the resultant cured products, various evaluations were carried out. Results thereof are shown together in Tables 5 and 6.

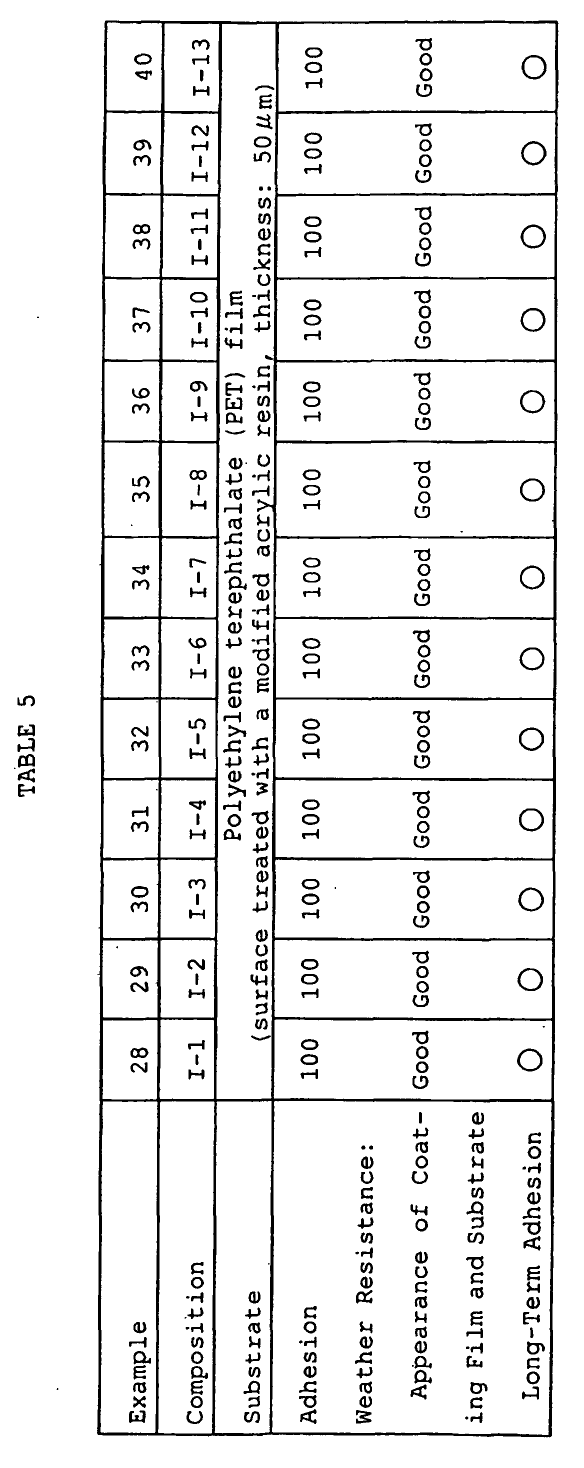

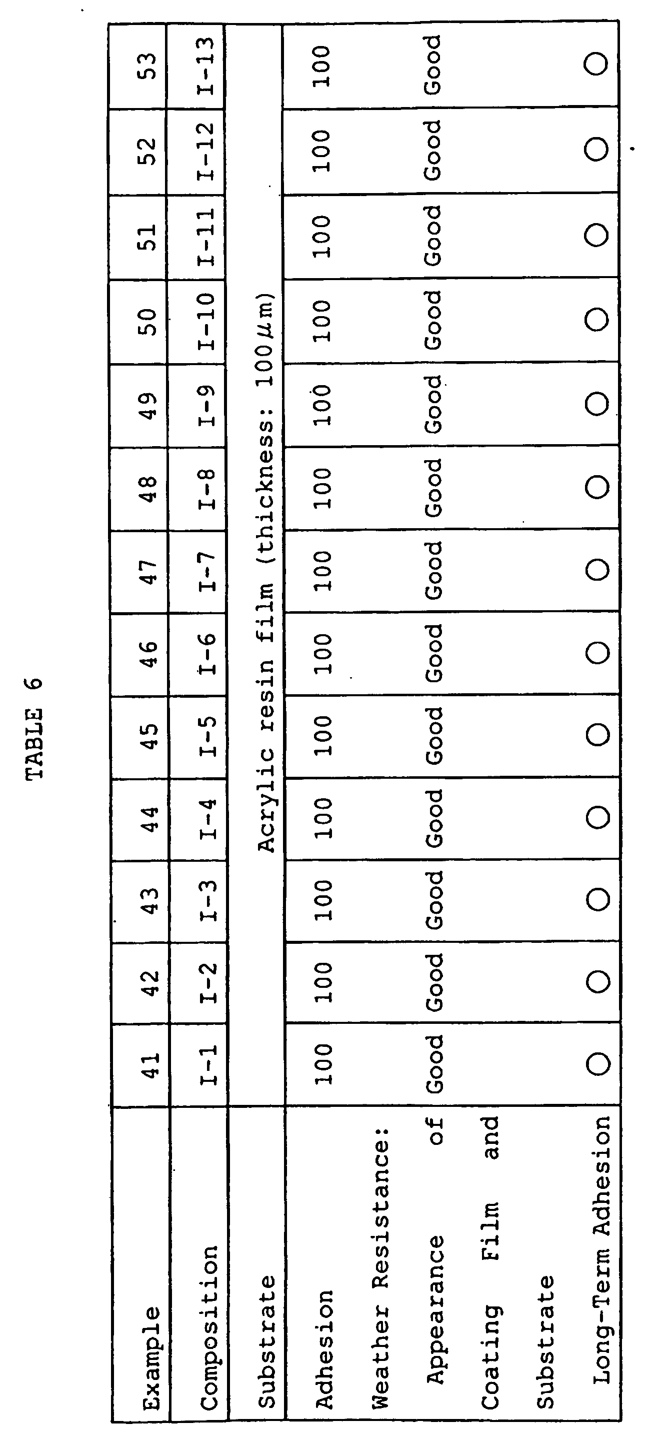

### Examples 54 to 65

An ultraviolet absorber (a methyl ethyl ketone solution, solid concentration: 15%) and/or an ultraviolet stabilizer (a methyl ethyl ketone solution, solid concentration: 15%) shown in Tables 7 and 8 was after added to 100 parts of each of the compositions of the present invention, and 10 parts of a solution of dioctyl tin dimaleate ester in isobutanol (solid concentration: 15%) was added thereto. Then, the resultant composition was applied onto a polyethylene terephthalate film (thickness: 50 µm) and dried so as to form a coating film having a dry thickness of 3 µm, thereby forming a cured product. For the resultant cured products, various evaluations were carried out. Results thereof are shown in Tables 7 and 8.

**TABLE 7**

| Example | 54 | 55 | 56 | 57 | 58 | 59 |
|---|---|---|---|---|---|---|
| Composition | I-2 | I-2 | I-2 | I-2 | I-2 | I-2 |
| Amount Compounded (parts) | | | | | | |
| UV Absorber; | | | | | | |
| RUVA 206 | 10 | - | | 10 | 10 | 5 |
| UVINUL 408 | - | 10 | - | - | - | - |
| TINUVIN 1577FF | - | - | 10 | - | - | 5 |

| UV Stabilizer; | | | | | | |
|---|---|---|---|---|---|---|
| CHIMASSORB 944LD | - | - | - | 10 | - | 10 |
| TINUVIN 770DF | - | - | - | - | 10 | - |

| Results of Evaluation | | | | | | |
|---|---|---|---|---|---|---|
| Adhesion | 100 | 100 | 100 | 100 | 100 | 100 |

| Weather Resistance: | | | | | | |
|---|---|---|---|---|---|---|
| Appearance of Coating Film and Substrate | Good | Good | Good | Good | Good | Good |
| Long-Term Adhesion | ○ | ○ | ○ | ○ | ○ | ○ |

**TABLE 8**

| Example | 60 | 61 | 62 | 63 | 64 | 65 |
|---|---|---|---|---|---|---|
| Composition | I-6 | I-6 | I-6 | I-6 | I-6 | I-6 |
| Amount Compounded (parts) | | | | | | |
| UV Absorber; | | | | | | |
| RUVA 206 | 10 | - | - | 10 | 10 | 5 |
| UVINUL 408 | - | 10 | - | - | - | - |
| TINUVIN 1577FF | - | - | 10 | - | - | 5 |

| UV Stabilizer; | | | | | | |
|---|---|---|---|---|---|---|
| CHIMASSORB 944LD | - | - | - | 10 | - | 10 |
| TINUVIN 770DF | - | - | - | - | 10 | - |

| Results of Evaluation | | | | | | |
|---|---|---|---|---|---|---|
| Adhesion | 100 | 100 | 100 | 100 | 100 | 100 |

| Weather Resistance: | | | | | | |
|---|---|---|---|---|---|---|
| Appearance of Coating Film and Substrate | Good | Good | Good | Good | Good | Good |
| Long-Term Adhesion | ○ | ○ | ○ | ○ | ○ | ○ |
| In Figs. 7 and 8, | | | | | | |
| RUVA 206: Benzotriazole ultraviolet absorber, manufactured by Otsuka Chemical Co., Ltd. | | | | | | |
| UVNUL 408: Benzophenone ultraviolet absorber, manufactured by BASF Japan Ltd. | | | | | | |
| TINUVIN 1577FF: Triazine ultraviolet absorber, manufactured by Ciba Specialty Chemicals K. K. | | | | | | |
| CHIMASSORB 944LD: Hindered amine light stabilizer, manufactured by Ciba Specialty Chemicals K. K. | | | | | | |
| TINUVIN 770DF: Hindered amine light stabilizer, manufactured by Ciba Specialty Chemicals K. K. | | | | | | |

### Examples 66 to 78

To 100 parts of each of the compositions of the present invention, 10 parts of a solution of ethylacetoacetate-aluminum-di-i-propylate in xylene (solid concentration: about 10%) was added, followed by various evaluations. Results thereof are shown together in Table 9 and 10.

**TABLE 9**

| Example | 66 | 67 | 68 | 69 | 70 | 71 | 72 |
|---|---|---|---|---|---|---|---|
| Composition | I-1 | I-2 | I-3 | I-4 | I-5 | I-6 | I-7 |
| Hardness | 3H | 3H | 3H | 3H | 3H | 3H | 4H |
| UV Absorption | ⓞ | ⓞ | ⓞ | ⓞ | ⓞ | ⓞ | ⓞ |
| Resistance to Bleedout | ⓞ | ⓞ | ⓞ | ⓞ | ⓞ | ⓞ | ⓞ |
| Transparency | ⓞ | ⓞ | ⓞ | ⓞ | ⓞ | ⓞ | ⓞ |

**TABLE 10**

| Example | 73 | 74 | 75 | 76 | 77 | 78 |
|---|---|---|---|---|---|---|
| Composition | I-8 | I-9 | I-10 | I-11 | I-12 | I-13 |
| Hardness | 4H | 4H | 4H | 2H | 2H | 3H |
| UV Absorption | ⓞ | ⓞ | ⓞ | ⓞ | ⓞ | ⓞ |
| Resistance to Bleedout | ⓞ | ⓞ | ⓞ | ⓞ | ⓞ | ⓞ |
| Transparency | ⓞ | ⓞ | ⓞ | ⓞ | ⓞ | ⓞ |

### Examples 79 to 91

To 100 parts of each of the compositions of the present invention, 10 parts of a solution of ethylacetoacetate-aluminum-di-i-propylate in xylene (solid concentration: about 10%) was added, and the resultant composition was applied onto each of substrates shown in Table 11 and dried so as to form a coating film having a dry thickness of 4 µm, thereby forming a cured product. For the resultant cured products, various evaluations were carried out. Results thereof are shown together in Table 11.

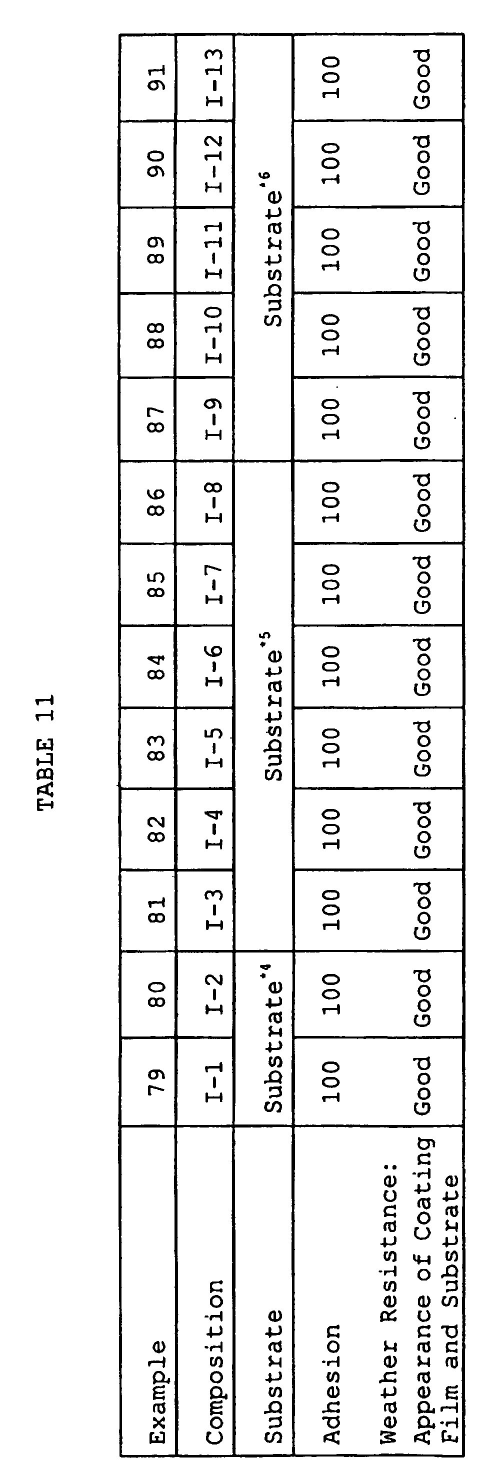

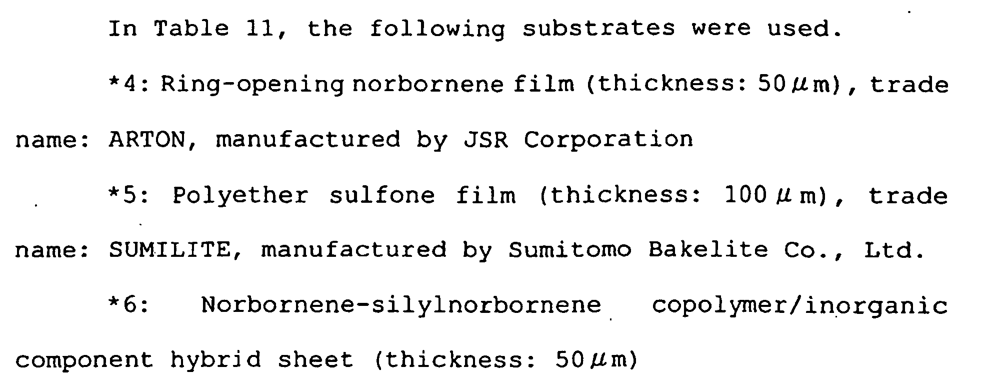

### Preparation Example 1 (Preparation of Coating Composition for Overcoating)

In a reaction vessel equipped with a stirrer and a reflux condenser, 91 parts of methyltrimethoxysilane and 41 parts of dimethyldimethoxysilane as component (B), 75 parts of (a-2) having a solid concentration of 40% as component (a), 6 parts of ethylacetoacetate-aluminum-di-i-propylate as component (D), and 10 parts of i-propyl alcohol as component (C) were placed, and mixed. The temperature of the mixture was elevated to 50°C with stirring. Then, 25 parts of water was continuously added as component (C) for 30 minutes, followed by reaction at 60°C for 4 hours. Then, 6 parts of acetylacetone was added as component (E), and stirred for 1 hour, followed by cooling to room temperature. Thereafter, 370 parts of i-propyl alcohol and 43 parts of i-butanol as component (C) and 130 parts of a dispersion of colloidal silica in isopropanol having a solid concentration of 15% as component (G) were added with stirring to obtain a overcoating composition having a solid concentration of 15% (hereinafter referred as to "(ii-1)").

### Preparation Examples 2 and 3 (Preparation of Coating Compositions for Overcoating)

Overcoating compositions (ii-2) and (ii-3) were prepared in the same manner as with Preparation Example 1 with the exception that the respective components were changed as shown in Table 12.

**TABLE 12**

| Preparation Example | 1 | 2 | 3 |
|---|---|---|---|
| Name of Composition | ii-1 | ii-2 | ii-3 |
| Mixing Component (parts) | | | |
| (a-2) | 75 | 75 | - |
| (B) Methyltrimethoxysilane | 91 | 91 | 101 |
| (B) Dimethyldimethoxysilane | 41 | 41 | - |
| (B) Trifunctional Oligomer*1 | - | - | 50 |
| (C) Water*2 | 25 | 25 | 25 |
| (C) i-Propyl Alcohol*2 | 10 | 10 | 10 |
| (C) i-Butanol*2 | - | - | 50 |
| (C) i-Propyl Alcohol*3 | 370 | 370 | 376 |
| (C) i-Butanol*3 | 34 | 34 | 34 |
| (D) Ethylacetoacetate-aluminum-di-i-propylate | 6 | 6 | 6 |
| | | | |

| After-Addition Component (parts) | | | |
|---|---|---|---|
| (E) Acetylacetone | 6 | 6 | 6 |
| (G) Colloidal Silica*4 | 130 | - | 130 |
| In Tables 1 and 2, *1, *2, *3 and *4 are as follows: | | | |

| | | | |
|---|---|---|---|
| *1: Terminal alkoxysilyl group-containing trifunctional siloxane oligomer (Mw = 4,000) | | | |
| *2: Added at the time of reaction | | | |
| *3: Added after the completion of reaction and cooling | | | |
| *4: Dispersion of Colloidal silica in i-propyl alcohol (solid concentration: 15%) | | | |

### Preparation Example 4 (Preparation of Coating Composition for Overcoating)

In a reaction vessel equipped with a stirrer and a reflux condenser, 145 parts of tetramethoxysilane as component (B) and 406 parts of propylene glycol monopropyl ether were placed, and sufficiently stirred. The temperature of the mixture was elevated to 60°C. Then, 2.4 parts of maleic anhydride dissolved in 69 parts of water was added with stirring for 1 hour, followed by reaction at 60°C for 4 hours. Thereafter, the reaction mixture was cooled to room temperature to obtain overcoating composition (ii-4). Results thereof are shown in Table 13.

### Preparation Examples 5 to 9 (Preparation of Coating Compositions for Overcoating)

Overcoating compositions (ii-5) to (ii-9) were prepared in the same manner as with Preparation Example 4 with the exception that the respective components were changed as shown in Table 13. When a dispersion of colloidal silica in i-propyl alcohol (solid concentration: 10%) was added, it was added after cooling to room temperature. Results thereof are shown in Table 13.

**TABLE 13**

| Preparation Example | 4 | 5 | 6 | 7 | 8 | 9 |
|---|---|---|---|---|---|---|
| Name of Composition | ii-4 | ii-5 | ii-6 | ii-7 | ii-8 | ii-9 |
| Compounding Formulation (parts) | | | | | | |
| Component (B) : | 145 | 145 | 115 | 115 | - | - |
| Tetramethoxysilane | - | - | - | - | 197 | 156 |
| Tetraethoxysilane | - | - | 25 | 25 | - | 25 |
| Methyltrimethoxysilane | | | | | | |
| Component (C) : | 69 | 69 | 69 | 69 | 69 | 69 |
| Water | | | | | | |
| Propylene Glycol Monopropyl Ether | 406 | 406 | - | 411 | - | 370 |
| i-Propyl Alcohol | - | - | 411 | - | 354 | - |
| Component (D): | | | | | | |
| Maleic Anhydride | 2.4 | 2.4 | 2.4 | 2.4 | 2.4 | 2.4 |
| Component (G): | | | | | | |
| Dispersion of Colloidal Silica in Isopropanol | - | 300 | - | 300 | - | 300 |

### Examples 91 to 99

To 100 parts of each of the coating compositions for overcoating of the present invention shown in Table 14, 10 parts of a solution of dioctyl tin dimaleate ester in i-propyl alcohol (solid concentration: 15%) was added, followed by sufficient stirring. The resultant composition was applied onto a surface of a 50 *µ*m thick polyethylene terephthalate film surface treated with a modified acrylic resin, and dried so as to form a coating film having a dry thickness of µm. Then, a composition was applied thereon and dried, which was obtained by adding 3 parts of a solution of a reaction product comprising dibutyl tin diacetate and silicate oligomer in i-propyl alcohol (solid concentration: 15%) to 100 parts of each of the coating compositions for overcoating of the present invention shown in Table 14, and sufficiently stirring the resultant mixture, thereby forming a cured product of the present invention. At this time, the coating films were formed so as to give a dry thickness of 0.5 µm for overcoating compositions (ii-1) to (ii-3), and a dry thickness of 0.1 µm for overcoating compositions (ii-4) to (ii-9). For the resultant cured products, various evaluations were carried out. Results thereof are shown together in Table 14.

**TABLE 14**

| Example | 91 | 92 | 93 | 94 | 95 | 96 | 97 | 98 | 99 |
|---|---|---|---|---|---|---|---|---|---|
| Undercoating Composition | I-1 | I-2 | I-3 | I-4 | I-5 | I-6 | I-7 | I-8 | I-13 |
| Overcoating Composition | ii-1 | ii-2 | ii-3 | ii-4 | ii-5 | ii-6 | ii-7 | ii-8 | ii-9 |
| Substrate | PET film (thickness: 50 *µ*m, surface treated with a modified acrylic resin) | | | | | | | | |
| Adhesion | 100 | 100 | 100 | 100 | 100 | 100 | 100 | 100 | 100 |
| | | | | | | | | | |

| Weather Resistance: | | | | | | | | | |
|---|---|---|---|---|---|---|---|---|---|
| Appearance of Coating Film and Substrate | Good | Good | Good | Good | Good | Good | Good | Good | Good |
| Resistance to Scratch | ○ | ○ | ○ | ○ | ○ | ○ | ○ | ○ | ○ |
| Long-Term Adhesion | ○ | ○ | ○ | ○ | ○ | ○ | ○ | ○ | ○ |

### Examples 100 to 108

To 100 parts of each of the coating compositions of the present invention shown in Table 15, 10 parts of a solution of dioctyl tin dimaleate ester in i-propyl alcohol (solid concentration: 15%) was added, followed by sufficient stirring. The resultant composition was applied onto a surface of a 100 *µ*m thick acrylic resin film, and dried so as to form a coating film having a dry thickness of µm. Then, a composition was applied thereon and dried, which was obtained by adding 3 parts of a solution of a reaction product comprising dibutyl tin diacetate and silicate oligomer in i-propyl alcohol (solid concentration: 15%) to 100 parts of each of the coating compositions for overcoating of the present invention shown in Table 15, and sufficiently stirring the resultant mixture, thereby forming a cured product of the present invention. At this time, the coating films were formed so as to give a dry thickness of 0.5 µm for overcoating compositions (ii-1) to (ii-3). For the resultant cured products, various evaluations were carried out. Results thereof are shown together in Table 15.

**TABLE 15**

| Example | 100 | 101 | 102 | 103 | 104 | 105 | 106 | 107 | 108 |
|---|---|---|---|---|---|---|---|---|---|
| Undercoating Composition | I-1 | | | I-3 | | | I-7 | | |
| Overcoating Composition | ii-1 | ii-2 | ii-3 | ii-1 | ii-2 | ii-3 | ii-1 | ii-2 | ii-3 |
| Substrate | Acrylic resin film (thickness: 100 *µ*m) | | | | | | | | |
| Adhesion | 100 | 100 | 100 | 100 | 100 | 100 | 100 | 100 | 100 |
| | | | | | | | | | |

| Weather Resistance: | | | | | | | | | |
|---|---|---|---|---|---|---|---|---|---|
| Appearance of Coating Film and Substrate | Good | Good | Good | Good | Good | Good | Good | Good | Good |
| Resistance to Scratch | ○ | ○ | ○ | ○ | ○ | ○ | ○ | ○ | ○ |
| Long-Term Adhesion | ○ | ○ | ○ | ○ | ○ | ○ | ○ | ○ | ○ |

### Examples 109 to 117

To 100 parts of each of the coating compositions of the present invention shown in Table 16, 10 parts of a solution of bis(acetylacetonate)-titanium-di-i-propylate in xylene (solid concentration: 10%) was added, followed by sufficient stirring. The resultant composition was applied onto a surface of a 100 µm thick acrylic resin film, and dried so as to form a coating film having a dry thickness of 2 µm. Then, each coating composition for overcoating shown in Table 16 was applied thereon and dried to form a cured product of the present invention. At this time, the coating films were formed so as to give a dry thickness of 0.1 µm for overcoating compositions (ii-4) to (ii-9). For the resultant cured products, various evaluations were carried out. Results thereof are shown together in Table 16.

**TABLE 16**

| Example | 109 | 110 | 111 | 112 | 113 | 114 | 115 | 116 | 117 |
|---|---|---|---|---|---|---|---|---|---|
| Undercoating Composition | I-1 | | | I-7 | | | I-13 | | |
| Overcoating Composition | ii-4 | ii-5 | ii-6 | ii-7 | ii-8 | ii-9 | ii-4 | ii-5 | ii-9 |
| Substrate | Acrylic resin film (thickness: 100 *µ*m) | | | | | | | | |
| Adhesion | 100 | 100 | 100 | 100 | 100 | 100 | 100 | 100 | 100 |
| | | | | | | | | | |

| Weather Resistance: | | | | | | | | | |
|---|---|---|---|---|---|---|---|---|---|
| Appearance of Coating Film and Substrate | Good | Good | Good | Good | Good | Good | Good | Good | Good |
| Resistance to Scratch | ○ | ○ | ○ | ○ | ○ | ○ | ○ | ○ | ○ |
| Long-Term Adhesion | ○ | ○ | ○ | ○ | ○ | ○ | ○ | ○ | ○ |

### Examples 118 to 139

To 100 parts of each of the coating compositions of the present invention shown in Table 17, 10 parts of a solution of dioctyl tin dimaleate ester in i-propyl alcohol (solid concentration: 15%) was added, followed by sufficient stirring. The resultant composition was applied onto each substrate shown in Table 17, and dried so as to form a coating film having a dry thickness of 2 µm. Then, a composition was applied thereon and dried, which was obtained by adding 3 parts of a solution of a reaction product comprising dibutyl tin diacetate and silicate oligomer in i-propyl alcohol (solid concentration: 15%) to 100 parts of each of the coating compositions for overcoating shown in Table 17, and sufficiently stirring the resultant mixture, thereby forming a cured product of the present invention. At this time, the coating films were formed so as to give a dry thickness of 0.5 µm for overcoating compositions (ii-1) to (ii-3), and a dry thickness of 0.1 µm for overcoating compositions (ii-4) to (ii-9). For the resultant cured products, the adhesion and weather resistance were evaluated. Results thereof are shown together in Table 17.

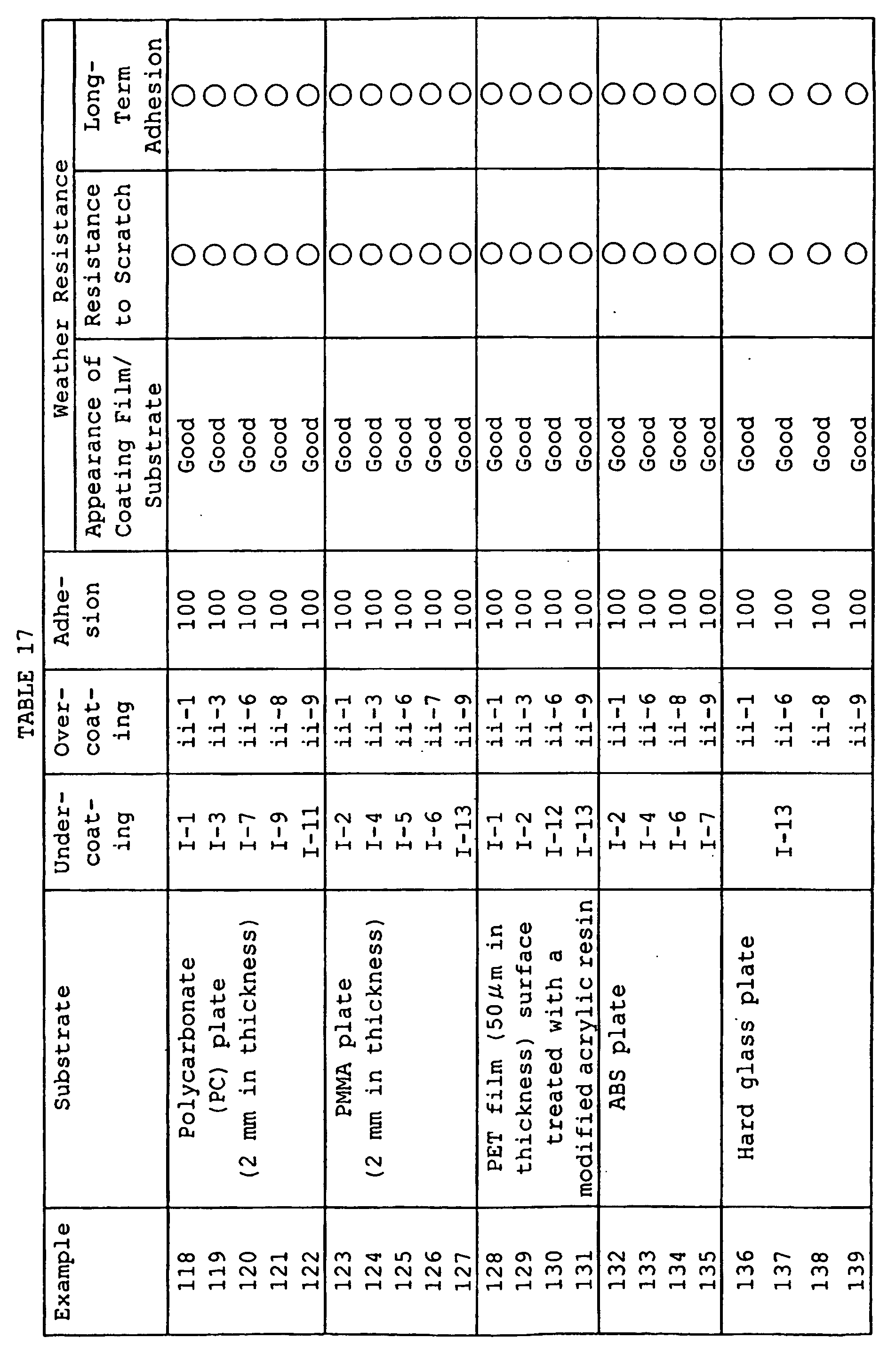

A coating composition excellent in storage stability, excellent in coating appearance, adhesion and weather resistance, high in hardness, having ultraviolet absorbing ability, and capable of preventing deterioration of a ground or a substrate, which comprises (A) a polymer containing (a1) a silyl group having a silicon atom bound to a hydrolytic group and/or a hydroxyl group, (a2) a group having ultraviolet absorbing ability and (a3) a group having ultraviolet stability in the same polymer chain, and further optionally comprises (B) at least one component selected from the group consisting of an organosilane represented by (R¹)ₙSi (OR²)₄₋ₙ, a hydrolyzate of the organosilane and a condensate of the organosilane; and a cured product thereof.

## Claims

1. A coating composition comprising (A) a polymer containing
(a1) a silyl group having a silicon atom bound to a hydrolytic group and/or a hydroxyl group,
(a2) a group having ultraviolet absorbing ability and being selected from groups having a benzotriazole, a benzophenone, a triazine, an oxalic anilide or a malonate structure, and
(a3) a group having ultraviolet stability, which is derived from a polymerizable unsaturated group-containing amine compound, 1,3-bis(4-benzoyl-3-hydroxyphenyl)-2-propyl(meth)acrylate, ethyl-2-cyano-3,3-diphenyl(meth)acrylate or a salicylic acid compound,
in the same polymer chain.

2. A coating composition comprising component (A) according to claim 1, and
(B) at least one component selected from the group consisting of an organosilane represented by the following general formula (1), a hydrolyzate of said organosilane and a condensate of said organosilane:
(R¹)ₙSi(OR²)₄₋ₙ (1)
wherein R¹, which may be the same or different when two or more R¹ groups are present, represents a hydrogen atom or a monovalent organic group having 1 to 8 carbon atoms; R², which may be the same or different when two or more R² groups are present, represents an alkyl group having 1 to 5 carbon atoms, an acyl group having 1 to 6 carbon atoms or a phenyl group; and n is an integer ranging from 0 to 3.

3. The coating composition according to claim 2, wherein component (A) is contained in an amount of 20 parts to 900 parts by weight, based on 100 parts by weight of component (B) (converted to a complete hydrolyzate/condensate of the organosilane represented by general formula (1)).

4. The coating composition according to any one of claims 1 to 3, wherein said silyl group (a1) is represented by the following general formula: 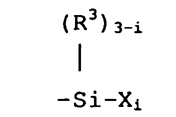 wherein X represents a hydrolytic group such as a halogen atom, an alkoxyl group, an acyloxy group, an aminoxy group, a phenoxy group, a thioalkoxyl group or an amino group, or a hydroxyl group; R³ represents a hydrogen atom, an alkyl group having 1 to 10 carbon atoms or an aralkyl group having 1 to 10 carbon atoms; and i is an integer ranging from 1 to 3.

5. The coating composition according to any one of claims 1 to 4, wherein said group (a2) having ultraviolet absorbing ability is an organic group having a benzotriazole structure.

6. The coating composition according to any one of claims 1 to 4, wherein said group (a2) having ultraviolet absorbing ability is an organic group having a benzophenone structure.

7. A cured product obtained by coating a substrate with the coating composition according to any one of claims 1 to 6 and curing the coating composition.

8. A cured product obtained by forming on a substrate an undercoat layer comprising the coating composition according to any one of claims 1 to 6 and curing the undercoat layer, and then, forming thereon an overcoat layer comprising a coating composition for overcoating comprising at least one component selected from the group consisting of an organosilane represented by the following general formula (1), a hydrolyzate of said organosilane and a condensate of said organosilane:
(R¹)ₙSi(OR²)₄₋ₙ (1)
wherein R¹, which may be the same or different when two or more R¹ groups are present, represents a hydrogen atom or a monovalent organic group having 1 to 8 carbon atoms; R², which may be the same or different when two or more R² groups are present, represents an alkyl group having 1 to 5 carbon atoms, an acyl group having 1 to 6 carbon atoms or a phenyl group; and n is an integer ranging from 0 to 3.

9. A cured product obtained by forming on a substrate an undercoat layer comprising the coating composition according to any one of claims 1 to 6 and curing the undercoat layer, and then, forming thereon an overcoat layer comprising a coating composition for overcoating comprising a polymer containing a silyl group having a silicon atom bound to a hydrolytic group and/or a hydroxyl group and at least one component selected from the group consisting of an organosilane represented by the following general formula (1), a hydrolyzate of said organosilane and a condensate of said organosilane:
(R¹)ₙSi(OR²)₄₋ₙ (1)
wherein R¹, which may be the same or different when two or more R¹ groups are present, represents a hydrogen atom or a monovalent organic group having 1 to 8 carbon atoms; R², which may be the same or different when two or more R² groups are present, represents an alkyl group having 1 to 5 carbon atoms, an acyl group having 1 to 6 carbon atoms or a phenyl group; and n is an integer ranging from 0 to 3.

10. The cured product according to any one of claims 7 to 9, wherein said substrate is made of a plastic resin.

## Patentansprüche

1. Beschichtungszusammensetzung, die ein (A) Polymer umfasst, das
(a1) eine Silylgruppe mit einem Siliciumatom, das an eine hydrolytische Gruppe und/oder eine Hydroxylgruppe gebunden ist,
(a2) eine Gruppe mit Ultraviolett-Absorptionsvermögen, die aus Gruppen mit einer Benzotriazol-, einer Benzophenon-, einer Triazin-, einer Oxalanilid- oder einer Malonatstruktur gewählt ist und
(a3) eine Gruppe mit Ultraviolettstabilität, die von einer Aminverbindung, die eine polymerisierbare, ungesättigte Gruppe enthält, 1,3-Bis(4-benzoyl-3-hydroxyphenyl)-2-propyl(meth)acrylat, Ethyl-2-cyano-3,3-diphenyl(meth)acrylat oder einer Salicylsäureverbindung abgeleitet ist,
in der gleichen Polymerkette enthält.

2. Beschichtungszusammensetzung, die eine Komponente (A) nach Anspruch 1 und
(B) mindestens eine Komponente, die aus der Gruppe gewählt ist, die aus einem Organosilan, dargestellt durch die folgende allgemeine Formel (1), einem Hydrolysat dieses Organosilans und einem Kondensat aus diesem Organosilan:
(R¹)ₙSi(OR²)₄₋ₙ (1)
worin R¹, das gleich oder unterschiedlich sein kann, wenn zwei oder mehrere R¹-Gruppen vorhanden sind, ein Wasserstoffatom oder eine einwertige organische Gruppe mit 1 bis 8 Kohlenstoffatomen bedeutet; R², das gleich oder unterschiedlich sein kann, wenn zwei oder mehrere R²-Gruppen vorhanden sind, eine Alkylgruppe mit 1 bis 5 Kohlenstoffatomen, eine Acylgruppe mit 1 bis 6 Kohlenstoffatomen oder eine Phenylgruppe bedeutet und n eine ganze Zahl in einem Bereich von 0 bis 3 bedeutet, besteht, umfasst.

3. Beschichtungszusammensetzung nach Anspruch 2, worin die Komponente (A) in einer Menge von 20 bis 900 Gew.-teilen, bezogen auf 100 Gew.-teile der Komponente (B) (umgewandelt in ein vollständiges Hydrolysat/Kondensat des durch die allgemeine Formel (1) dargestellten Organosilans) enthalten ist.

4. Beschichtungszusammensetzung nach einem der Ansprüche 1 bis 3, worin die Silylgruppe (a1) durch die folgende allgemeine Formel dargestellt ist: 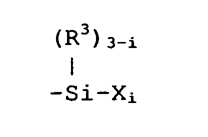 worin X eine hydrolytische Gruppe, wie ein Halogenatom, eine Alkoxygruppe, eine Acyloxygruppe, eine Aminoxygruppe, eine Phenoxygruppe, eine Thioalkoxylgruppe oder eine Aminogruppe oder eine Hydroxylgruppe bedeutet; R³ ein Wasserstoffatom, eine Alkylgruppe mit 1 bis 10 Kohlenstoffatomen oder eine Aralkylgruppe mit 1 bis 10 Kohlenstoffatomen darstellt und i eine ganze Zahl im Bereich von 1 bis 3 bedeutet.

5. Beschichtungszusammensetzung nach einem der Ansprüche 1 bis 4, worin die Gruppe (a2) mit Ultraviolett-Absorptionsvermögen eine organische Gruppe mit einer Benzoltriazolstruktur ist.

6. Beschichtungszusammensetzung nach einem der Ansprüche 1 bis 4, worin die Gruppe (a2) mit Ultraviolett-Absorptionsvermögen eine organische Gruppe mit einer Benzophenonstruktur ist.

7. Gehärtetes Produkt, erhalten durch Beschichten eines Substrats mit der Beschichtungszusammensetzung nach einem der Ansprüche 1 bis 6 und Härten der Beschichtungszusammensetzung.

8. Gehärtetes Produkt, erhalten durch Ausbildung einer Grundierungsschicht auf einem Substrat, die die Beschichtungszusammensetzung nach einem der Ansprüche 1 bis 6 umfasst, und Härten der Grundierungsschicht und anschlie-ßende Bildung einer Überzugsschicht darauf, die eine Beschichtungszusammensetzung für den Überzug umfasst und mindestens eine Komponente, die aus der Gruppe gewählt ist, die aus einem Organosilan, dargestellt durch die folgende allgemeine Formel (1), einem Hydrolysat dieses Organosilans und einem Kondensat aus diesem Organosilan
(R¹)ₙSi(OR²)₄₋ₙ (1)
besteht, worin R¹, das gleich oder unterschiedlich sein kann, wenn zwei oder mehrere R¹-Gruppen vorhanden sind, ein Wasserstoffatom oder eine einwertige organische Gruppe mit 1 bis 8 Kohlenstoffatomen bedeutet; R², das gleich oder unterschiedlich sein kann, wenn zwei oder mehrere R²-Gruppen vorhanden sind, eine Alkylgruppe mit 1 bis 5 Kohlenstoffatomen, eine Acylgruppe mit 1 bis 6 Kohlenstoffatomen oder eine Phenylgruppe bedeutet und n eine ganze Zahl im Bereich von 0 bis 3 bedeutet, umfasst.

9. Gehärtetes Produkt, erhalten durch Ausbildung einer Grundierungsschicht auf einem Substrat, die die Beschichtungszusammensetzung nach einem der Ansprüche 1 bis 6 umfasst, und Härten der Grundierungsschicht und anschlie-ßende Ausbildung einer Überzugsschicht darauf, die eine Beschichtungszusammensetzung für den Überzug umfasst und ein Polymer, das eine Silylgruppe enthält und ein Siliciumatom gebunden an eine hydrolytische Gruppe und/oder Hydroxylgruppe aufweist, und mindestens eine Komponente, gewählt aus der Gruppe, die aus einem Organosilan, dargestellt durch die folgende allgemeine Formel (1), einem Hydrolysat dieses Organosilans und einem Kondensat aus diesem Organosilan:
(R¹)ₙSi(OR²)₄₋ₙ (1)
besteht, worin R¹, das gleich oder unterschiedlich sein kann, wenn zwei oder mehrere R¹-Gruppen vorhanden sind, ein Wasserstoffatom oder eine einwertige organische Gruppe mit 1 bis 8 Kohlenstoffatomen bedeutet; R², das gleich oder unterschiedlich sein kann, wenn zwei oder mehrere R²-Gruppen vorhanden sind, eine Alkylgruppe mit 1 bis 5 Kohlenstoffatomen, eine Acylgruppe mit 1 bis 6 Kohlenstoffatomen oder eine Phenylgruppe bedeutet und n eine ganze Zahl im Bereich von 0 bis 3 bedeutet, umfasst.

10. Gehärtetes Produkt nach einem der Ansprüche 7 bis 9, worin das Substrat aus einem Kunststoffharz hergestellt ist.

## Revendications

1. Composition de revêtement comprenant(A) un polymère contenant
(a1) un groupe silyle comportant un atome de silicium lié à un groupe hydrolytique et/ou un groupe hydroxyle,
(a2) un groupe présentant une capacité d'absorption des ultraviolets et étant choisi parmi les groupes ayant une structure benzotriazole, benzophénone, triazine, anilide oxalique ou malonate, et
(a3) un groupe présentant une stabilité aux ultraviolets, qui est dérivé d'un composé amine contenant un groupe polymérisable insaturé, le (méth)acrylate de 1,3-bis(4-benzoyl-3-hydroxyphényl)-2-propyle, le (méth)acrylate d'éthyl-2-cyano-3,3-diphényle ou un composé de l'acide salicylique,
dans la même chaîne polymère.

2. Composition de revêtement comprenant un composant (A) selon la revendication 1, et
(B) au moins un composant choisi dans le groupe consistant en un organosilane représenté par la formule générale suivante (1), un hydrolysat dudit organosilane et un condensat dudit organosilane :
(R¹)ₙSi(OR²)₄₋ₙ (1)
où R¹, qui peut être identique ou différent lorsque deux groupes R¹ ou plus sont présents, représente un atome d'hydrogène ou un groupe organique monovalent ayant de 1 à 8 atomes de carbone ; R², qui peut être identique ou différent lorsque deux groupes R² ou plus sont présents, représente un groupe alkyle ayant de 1 à 5 atomes de carbone, un groupe acyle ayant de 1 à 6 atomes de carbone ou un groupe phényle ; et n est un nombre entier compris entre 0 et 3.

3. Composition de revêtement selon la revendication 2, dans laquelle le composant (A) est présent en une quantité comprise entre 20 parties et 900 parties en poids, par rapport à 100 parties en poids du composant(B) (converti en un hydrolysat/condensat complet de l'organosilane représenté par la formule générale (1)).

4. Composition de revêtement selon l'une quelconque des revendications 1 à 3, dans laquelle ledit groupe silyle (a1) est représenté par la formule générale suivante : 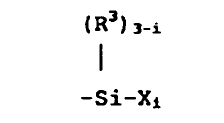 où X représente un groupe hydrolytique tel qu'un atome d'halogène, un groupe alcoxyle, un groupe acyloxy, un groupe aminoxy, un groupe phénoxy, un groupe thioalcoxyle ou un groupe amino, ou un groupe hydroxyle ; R³ représente un atome d'hydrogène, un groupe alkyle ayant de 1 à 10 atomes de carbone ou un groupe aralkyle ayant de 1 à 10 atomes de carbone ; et i est un nombre entier compris entre 1 et 3.

5. Composition de revêtement selon l'une quelconque des revendications 1 à 4, dans laquelle ledit groupe (a2) présentant une capacité d'absorption des ultraviolets est un groupe organique ayant une structure benzotriazole.

6. Composition de revêtement selon l'une quelconque des revendications 1 à 4, dans laquelle ledit groupe (a2) présentant une capacité d'absorption des ultraviolets est un groupe organique ayant une structure benzophénone.

7. Produit vulcanisé obtenu en recouvrant un substrat avec la composition de revêtement selon l'une quelconque des revendications 1 à 6 et en vulcanisant la composition de revêtement.

8. Produit vulcanisé obtenu en formant sur un substrat une sous-couche de revêtement comprenant la composition de revêtement selon l'une quelconque des revendications 1 à 6 et en vulcanisant la sous-couche de revêtement, puis en formant sur cette sous-couche une surcouche de revêtement comprenant une composition de revêtement pour surcouche comprenant au moins un composant choisi dans le groupe consistant en un organosilane représenté par la formule générale suivante (1), un hydrolysat dudit organosilane et un condensat dudit organosilane :
(R¹)ₙSi(OR²)₄₋ₙ (1)
où R¹, qui peut être identique ou différent lorsque deux groupes R¹ ou plus sont présents, représente un atome d'hydrogène ou un groupe organique monovalent ayant de 1 à 8 atomes de carbone ; R², qui peut être identique ou différent lorsque deux groupes R² ou plus sont présents, représente un groupe alkyle ayant de 1 à 5 atomes de carbone, un groupe acyle ayant de 1 à 6 atomes de carbone ou un groupe phényle ; et n est un nombre entier compris entre 0 et 3.

9. Produit vulcanisé obtenu en formant sur un substrat une sous-couche de revêtement comprenant la composition de revêtement selon l'une quelconque des revendications 1 à 6 et en vulcanisant la sous-couche de revêtement, puis en formant sur cette sous-couche une surcouche de revêtement comprenant une composition de revêtement pour surcouche comprenant un polymère contenant un groupe silyle ayant un atome de silicium lié à un groupe hydrolytique et/ou un groupe hydroxyle et au moins un composant choisi dans le groupe consistant en un organosilane représenté par la formule générale suivante (1), un hydrolysat dudit organosilane et un condensat dudit organosilane :
(R¹)ₙSi(OR²)₄₋ₙ (1)
où R¹, qui peut être identique ou différent lorsque deux groupes R¹ ou plus sont présents, représente un atome d'hydrogène ou un groupe organique monovalent ayant de 1 à 8 atomes de carbone ; R², qui peut être identique ou différent lorsque deux groupes R² ou plus sont présents, représente un groupe alkyle ayant de 1 à 5 atomes de carbone, un groupe acyle ayant de 1 à 6 atomes de carbone ou un groupe phényle ; et n est un nombre entier compris entre 0 et 3.

10. Produit vulcanisé selon l'une quelconque des revendications 7 à 9, dans lequel ledit substrat est fait d'une résine plastique.
